(19) Europäisches Patentamt
European Patent Office
Office européen des brevets

(11) **EP 2 458 725 A1**

(12) **EUROPÄISCHE PATENTANMELDUNG**

(43) Veröffentlichungstag:
**30.05.2012   Patentblatt 2012/22**

(51) Int Cl.:
*H02M 5/22* (2006.01)          *H02M 3/335* (2006.01)
*H02M 1/32* (2007.01)          *H02M 1/36* (2007.01)

(21) Anmeldenummer: **10193201.0**

(22) Anmeldetag: **30.11.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **ABB Research Ltd.**
**8050 Zürich (CH)**

(72) Erfinder:
• **Kenzelmann, Stephan**
  **1006, Lausanne (CH)**
• **Rufer, Alfred**
  **1110, Morges (CH)**

• **De-Novaes, Yales**
  **89221-665 Joinville SC (BR)**
• **Canales, Francisco**
  **5405, Baden-Dättwil (CH)**
• **Dujic, Drazen**
  **5430, Wettingen (CH)**
• **Winkelnkemper, Manfred**
  **5CH-408, Ennetbaden (CH)**

(74) Vertreter: **ABB Patent Attorneys**
**C/o ABB Schweiz AG**
**Intellectual Property (CH-LC/IP)**
**Brown Boveri Strasse 6**
**CH-5400 Baden (CH)**

(54)   **Elektrisches Energiewandlersystem und Verfahren zu dessen Betrieb**

(57)   Die Erfindung betrifft ein Energiewandlersystem (1; 10; 20; 30) zum Verbinden eines ersten Netzes, insbesondere eines Gleichspannungsnetzes oder eines ein- oder mehrphasigen Wechselspannungsnetzes, mit einem zweiten Netz, insbesondere eines Gleichspannungsnetzes oder eines ein- oder mehrphasigen Wechselspannungsnetzes, umfassend:
- eine erste (2, 12, 22, 22) und eine zweite Wandlerstufe (3; 13; 23; 33), die als modulare Mehrpegelwandler aufgebaut sind, wobei jeder modulare Mehrpegelwandler Wandlerzweige mit einer Serienschaltung von mehreren Untermodulen (5; 15; 25; 35) mit jeweils einem Energiespeicher (50; 55) aufweist, wobei die Untermodule Leistungshalbleiterschalter (52; 56) mit parallelen Freilaufdioden (53; 57) aufweisen;
- einen Transformator (4, 14, 24, 34), der die erste Wandlerstufe (2, 12, 22, 22) und die zweite Wandlerstufe (3; 13; 23; 33) miteinander koppelt.

Fig. 2

**Beschreibung**

**Technisches Gebiet**

Die Erfindung betrifft Wandlerschaltungen für Hoch- und Mittelspannungen, insbesondere Energieübertragungssysteme mit modularen Mehrpegelwandlern mit mehreren Untermodulen. Die Erfindung betrifft weiterhin Verfahren zum Betreiben eines Energieübertragungssystems.

**Stand der Technik**

Das Übertragen von elektrischer Energie über größere Distanzen erfordert in der Regel das Ändern des Spannungspegels der zu übertragenden Spannung, um die Übertragungsverluste zu reduzieren. D.h die Spannungsniveaus können mithilfe von Wandlerschaltungen entsprechend erhöht und am Zielort entsprechend erniedrigt werden. Dazu werden Energiewandlersysteme verwendet, die eine galvanische Trennung vorsehen und in der Lage sind, Spannungen zu übertragen, die größer sind als die üblichen Sperrspannungen von Halbleiterbausteinen. Dies macht entweder eine Mehrpegeltopologie oder eine Reihenschaltung von Schaltelementen beim Aufbau des verwendeten Wandlersystems notwendig.

In Energieübertragungsnetzen erfolgt die Kopplung von AC-Netzen mit DC-Netzen üblicherweise über ein elektronisches Stellglied in Form eines so genannten Energiewandlers, der die Spannungen und Ströme von der AC-Seite zur DC-Seite und von der DC-Seite zur AC-Seite umwandelt. Die galvanische Trennung beider Netze erfolgt üblicherweise auf der AC-Seite mit einem Transformator, der in einer vorgegebenen Netzfrequenz des Eingangs- oder des Ausgangsnetzes betrieben wird.

Bisherige Wandlerschaltungen für Mittel- und Hochspannungen basieren auf einer Zweipegel- bzw. Dreipegel-Wandlerstruktur, wie z.B. netzgeführte CSI-Wandler (Current

Source Inverter) und 3-stufige NPC Converter (Neutral Point Clamped) oder ANPC Converter (Active Neutral Point Clamped) sein. Ferner sind als Mehrpegelwandler kaskadierte Wandler und modulare Mehrpegelwandler bekannt. Insbesondere bei Verwendung von Wandlerschaltungen mit Energiespeichern, die in der Regel als interne schwebende Kapazitäten ausgebildet sind und die häufig bei Mehrpegelwandlern verwendet werden, ist bei Hochspannungsanwendungen in der Regel eine große Anzahl an Kapazitäten notwendig, um die hohe Spannung aufzunehmen. Kaskadierte Wandler benötigen beispielsweise eine hohe Anzahl von zueinander isolierten Gleichspannungsquellen, die durch komplexe Mehrfachwicklungstransformatoren bereitgestellt werden. Die Komplexität und die Nachteile der Wandler mit schwebenden Kapazitäten erhöhen sich erheblich, wenn die Anzahl der bereitgestellten Pegel vergrößert wird. Bei noch höheren Spannungen müssen Wandler der zuvor genannten Topologien durch Reihenschaltungen von Leistungshalbleiterschaltern, wie beispielsweise IGBTs, aufgebaut werden.

Eine vergleichsweise neue Wandlertopologie stellen die modularen Mehrpegelwandler dar, die auch als MMC (Modular Multilevel Converter) bezeichnet werden. Die modularen Mehrpegelwandler können zum beliebigen Wandeln zwischen Gleichspannungen und/oder Wechselspannungen eingesetzt werden und sind durch Zusammenschaltung von gleichartigen Untermodulen aufgebaut. Derartige modulare Mehrpegelwandler sind beispielsweise aus R. Marquardt et al., "Modulares Stromrichterkonzept für Netzkupplungsanwendungen bei hohen Spannungen", Universität der Bundeswehr, München, ETG-Fachtagung, Bad Nauheim, VDE 2002, und aus A. Lesnicar, R. Marquardt, "A new modular voltage source inverter topology", EPE 2003, Toulouse, ISBN 90-75815-07-7 bekannt. Die dort vorgestellten modularen Mehrpegelwandler teilen im Gegensatz zu dem üblichen Ansatz der Verwendung von Inverterschaltungen die Zwischenkreiskapazität in eine Anzahl von Kapazitäten innerhalb des Wandlers auf.

Ein herkömmlicher modularer Mehrpegelwandler weist Stromzweige mit Serienschaltungen einer festgelegten Anzahl von Untermodulen auf, die als wesentliches Element eine Halbbrücke (bei unipolaren Untermodulen) bzw. eine H-Brücke (bei bipolaren Untermodulen) aufweisen. Die Untermodule weisen einen Energiespeicher, in der Regel in Form einer oder mehrerer Kapazitäten, auf und sind ausgebildet, um

1. die Kapazität, gegebenenfalls in verschiedenen Polungen, an die Anschlüsse anzulegen;
2. die Anschlüsse kurzzuschließen und den Energiespeicher von den Anschlüssen abzukoppeln; oder
3. die Anschlüsse voneinander zu trennen, wobei der Energiespeicher von den Anschlüssen abgekoppelt ist und lediglich über die den Leistungshalbleiterschaltern zugeordnete Freilaufdioden geladen, nicht jedoch entladen werden kann.

Die modularen Mehrpegelwandler können zur direkten Verbindung von zwei AC-Netzen in einer so genannten Matrixschaltung vorgesehen werden, bei der alle eingangsseitigen Phasenanschlüsse eines ersten AC-Netzes über Zweige mit mehreren Untermodulen mit allen ausgangsseitigen Phasenanschlüssen des zweiten AC-Netzes verbunden werden. Die Matrixschaltung ist besonders geeignet, durch Ströme, die ausschließlich in der Matrixschaltung zirkulieren, Energien zwischen den einzelnen Zweigen auszutauschen, ohne die Ströme und die Anschlussspannungen zu beeinflussen. Eine solche Schaltung ist beispielsweise in GB 22 94 821 A1, R. W. Ericson et al., "A new family of matrix converters", IEEE Industrial Electronic Society Annual Conference (IECON 01 ), Bd. 2, Seiten 1515-1520, November 2001, und in S. Ang Kititrakul et al., "Control and implementation of a new modular matrix converter", IEEE 2004, beschrieben.

Eine wichtige Voraussetzung für die Verwendung von Wandlerschaltungen zur Energieübertragung ist der Schutz gegen Kurzschlussströme und Überspannungen. In dem oben beschriebenen modularen Mehrpegelwandler zur Verbindung zweier AC-Netze kann bei einem einseitigen Erdschluß ein Kurzschlussstrom verhindert werden, indem die Halbleiterschalter aller Untermodule ausgeschaltet werden und über die Freilaufdioden der Halbleiterschalter die Energiespeicher aller Untermodule in den Zweigstrompfad geschaltet sind. Die Summenspannung der Spannungen aller Energiespeicher der Untermodule ist in der Regel größer als die Differenz der angelegten Netzspannungen, so dass der Kurzschlussstrom blockiert wird. Für einen solchen Fehlerfall braucht man daher keine zusätzliche Schutzeinrichtung im modularen Mehrpegelwandler.

Wenn jedoch eines der AC-Netze bereits geerdet ist, beispielsweise durch ein Dreiphasennetz mit geerdetem Trafosternpunkt oder ein geerdetes Zweiphasenbahnnetz, und ein Erdschluss auf der anderen AC-Netz auftritt, werden einzelne Zweige praktisch überbrückt und einer oder mehrere verbleibende Zweige sind nicht in der Lage, die nun auftretende maximale Differenzspannung zwischen Ein- und Ausgangsseite aufzunehmen. Ohne weitere Schutzmaßnahmen werden dabei die Untermodule überladen und die maximale Sperrspannung der Halbleiterschalter überschritten. Die Untermodule müssen deshalb mit einem einschaltbaren Hilfskreis versehen sein, der im Fall des Kurzschlusses aktiviert wird und das Untermodul überbrückt. Dadurch entsteht ein Kurzschlussstrom, der an dem betreffenden Zweig vorbei von einem AC-Netz in das zweite AC-Netz fließt. Der Kurzschlussstrom wird dann durch den Netztrenner nach mehreren 10msec bis einigen 100 msec abgeschaltet. Der Hilfskreis enthält zweckmäßigerweise einen Schalter mit hohem Lastintegral, beispielsweise einen Thyristor, ein GTO oder einen IGCT, der den Kurzschlussstrom über die durch den Netztrenner gegebene Dauer führen kann, ohne zerstört zu werden. Ein etwaig eingangsseitig oder ausgangsseitig angeschlossener Transformator wird für dieselbe Dauer mit dem Kurzschlussstrom belastet, so dass auch hier die entsprechenden Schutzmaßnahmen vorzusehen sind.

Bei einem Mehrpegelwandler zur Verbindung eines DC Netzes mit einem AC Netz kann bei einem Kurzschluss auf der AC-Seite ein Kurzschlussstrom verhindert werden, indem die Halbleiterschalter aller Untermodule ausgeschaltet werden. Dann sind über die Freilaufdioden der Halbleiterschalter die Energiespeicher aller Untermodule in den Zweigstrompfad geschaltet. Die Summenspannung der Spannungen aller Energiespeicher der Untermodule ist in der Regel größer als die Differenz der angelegten Netzspannungen, so dass der Kurzschlussstrom blockiert wird. Für einen solchen Fehlerfall braucht man daher keine zusätzliche Schutzeinrichtung im modularen Mehrpegelwandler.

Bei einem Kurzschluss im DC Netz fliesst ein Kurzschlussstrom durch den Mehrpegelwandler, da nun die Untermodule durch die Freilaufdioden in den unipolaren Untermodulen überbrückt werden und zwar unabhängig von dem Schaltzustand der Halbleiterschalter. Die Freilaufdioden werden nicht durch das Öffnen eines Netztrenners geschützt, da dieser erst nach bis zu 100ms öffnet, während normal dimensionierte Freilaufdioden innerhalb sehr viel kürzerer Zeit das zulässige Lastintegral überschreiten und thermisch zerstört werden. Die Untermodule müssen deshalb mit einem einschaltbaren Hilfskreis versehen sein, der in diesem Fall aktiviert wird und das Untermodul überbrückt. Dadurch entsteht ein Kurzschlussstrom, der an den betreffenden Untermodulen vorbei fließt.

Weiterhin besteht bei der Verwendung von Transformatoren eingangsseitig oder ausgangsseitig der bekannten Energiewandlersysteme der Nachteil, dass der Transformator auf die geforderte Netzfrequenz, entweder auf die Netzfrequenz des Eingangsnetzes oder die Netzfrequenz des Ausgangsnetzes, abgestimmt sein muss. Dadurch ergeben sich in der Regel erhebliche Baugrößen, die derartige Energiewandlersysteme aufwändig und teuer machen.

In der Druckschrift WO 2010 694 01 A1 ist ein modularer Mehrpegelwandler gezeigt. Dieser modulare Mehrpegelwandler ist nicht geeignet, zwei AC-Netze mit gleicher Frequenz zu verbinden. Dies liegt daran, dass die Energiespeicher in den Untermodulen des modularen Mehrpegelwandlers eine Blindleistung mit einer Frequenz bereitstellen müssen, die der Differenz der Frequenzen beider AC-Netze entspricht. Bei gleichen Netzfrequenzen müssten somit die Untermodule eine DC-Leistung, d. h. permanent eine Wirkleistung bereitstellen. Zwar ist es möglich, zwischen den Wandlerzweigen geregelt Energie auszutauschen und somit eine gewisse Leistung zwischen zwei AC-Netzen mit gleicher Frequenz auszutauschen, jedoch ist das prinzipbedingt mit einer erheblichen zusätzlichen Phasenspannung verbunden, die als Gleichtaktspannung auf alle Phasenausgänge des ausgangsseitigen AC-Netzes aufgeschaltet wird. Ein solches Verfahren ist in DE 10 2008 0148 98 A1 für einen modularen Mehrpegelwandler mit unipolaren Untermodulen beschrieben. Im Unterschied dazu wird jedoch der modulare Mehrpegelwandler nahe der Vollaussteuerung betrieben wird, so dass es nur möglich ist, eine relativ geringe Gleichtaktspannung aufzuschalten und somit nur eine geringe Leistung zwischen den AC-Netzen auszutauschen.

Darstellung der Erfindung

Es ist daher Aufgabe der vorliegenden Erfindung, ein verbessertes Energiewandlersystem zur Verfügung zu stellen, bei dem unabhängig von der externen Beschaltung und Einsatzgebiet keine zusätzlichen Maßnahmen zum Schutz des Energiewandlersystems, beispielsweise gegen Kurzschlussströme, vorgenommen werden müssen. Weiterhin ist es eine Aufgabe der vorliegenden Erfindung ein Energiewandlersystem zur Verfügung zu stellen, das flexibel sowohl als DC/DC-, DC/AC-, AC/DC- und AC/AC-Wandlersystem einsetzbar ist und bei dem der Transformator in einer verringerten Baugröße realisiert werden kann.

Weiterhin ist es Aufgabe der vorliegenden Erfindung, ein Verfahren zum Betreiben eines solchen Energiewandlersystems zur Verfügung zu stellen.

Diese Aufgabe wird durch das Energiewandlersystem gemäß Anspruch 1 sowie durch das Verfahren zum Betreiben des Energiewandlersystems sowie das Verfahren zum initialen Aufladen von Energiespeichern des Energiewandlersystems auf eine Betriebsspannung gemäß den nebengeordneten Ansprüchen gelöst.

Weitere vorteilhafte Ausgestaltungen der vorliegenden Erfindung sind in den abhängigen Ansprüchen angegeben.

Gemäß einem ersten Aspekt ist ein Energiewandlersystem zum Verbinden eines ersten Netzes, insbesondere eines Gleichspannungsnetzes oder eines ein- oder mehrphasigen Wechselspannungsnetzes, mit einem zweiten Netz, insbesondere eines Gleichspannungsnetzes oder eines ein- oder mehrphasigen Wechselspannungsnetzes, vorgesehen. Das Energiewandlersystem umfasst:

- eine erste und eine zweite Wandlerstufe, die als modulare Mehrpegelwandler aufgebaut sind, wobei jeder modulare Mehrpegelwandler Wandlerzweige mit einer Serienschaltung von mehreren Untermodulen mit jeweils einem Energiespeicher aufweist, wobei die Untermodule Leistungshalbleiterschalter mit parallelen Freilaufdioden aufweisen;
- einen Transformator, der die erste Wandlerstufe und die zweite Wandlerstufe miteinander koppelt.

Eine Idee des obigen Energiewandlersystems besteht darin, dass im Gegensatz zu der Ausgestaltung, wie sie in der Druckschrift WO 2010/69401 A1 beschrieben ist, zwei modulare Mehrpegelwandler verwendet werden, die über einen Transformator miteinander gekoppelt sind. Gegenüber der obigen Druckschrift erscheint es damit, dass der Aufwand bezüglich der Leistungselektronik zunächst scheinbar verdoppelt wird, jedoch weist eine solche Topologie eines Energiewandlersystems einige Vorteile auf. Das obige Energiewandlersystem umfasst einen ersten modularen Mehrpegelwandler und einen zweiten modularen Mehrpegelwandler, die durch einen Transformator galvanisch voneinander getrennt sind. Die modularen Mehrpegelwandler können sowohl unipolare als auch bipolare Untermodule aufweisen. Ein solches Energiewandlersystem lässt sich in optimaler Weise auf die Verbindung zweier AC-Netze, zweier DC-Netze oder eines AC-Netzes mit einem DC-Netz anwenden. Auch ein bidirektionaler Leistungsfluss ist möglich. Bei Einsatz des obigen Energiewandlersystems zur Verbindung von zwei AC-Netzen ist die Transformatorfrequenz unabhängig von den Frequenzen der zu verbindenden AC-Netze einstellbar. Dadurch ist die Baugröße des Transformators, wie er beispielsweise in der Druckschrift WO 2010 69 401 A1 angegeben ist, bei gegebener Leistung und gegebenem Spannungsverhältnis nicht mehr durch die Frequenz der AC-Netze festgelegt. Dadurch kann die Betriebsfrequenz des Transformators erhöht werden, wodurch seine Baugröße bei gegebener zu übertragender Leistung erheblich verringert werden kann.

Wie schon vorhergehend erwähnt müssen die Energiespeicher eine Blindleistung bereitstellen, deren Frequenz die Differenz der Frequenzen der angeschlossenen Netze entspricht. Die Kapazitäten der Energiespeicher des in dieser Erfindungsmeldung beschriebenen Energiewandlersystems können umso geringer ausgelegt werden, je größer die Frequenzdifferenz der Transformatorfrequenz und der Frequenz des AC Netzes ist. Die mögliche Verringerung der Kapazitäten ist ungefähr direkt proportional zur Frequenzdifferenz, d.h. bei Verdopplung der Differenzfrequenz kann die Kapazität in etwa halbiert werden. Da die Energiespeicher einen erheblichen Teil der Kosten und des Volumen des MMLC ausmachen, stellt dieser Zusammenhang einen wesentlichen Vorteil dar.

Die Höhe der netzseitigen Ein- und Ausgangsspannungen der einzelnen modularen Mehrpegelwandler innerhalb des Energiewandlersystems kann unabhängig von den transformatorseitigen Spannungen gewählt werden. Im Allgemeinen nutzt man diese Tatsache aus, um die eigentliche Spannungsübersetzung im Transformator zu realisieren und nicht im Wandlersystem. Das obige Energiewandlersystem hat jedoch den Vorteil, dass man bei der Auslegung des Spannungswandlersystems einen zusätzlichen Freiheitsgrad dazu nutzen kann, die Spannungen an dem Transformator in gewissen Grenzen unabhängig von den gegebenen Netzspannungen der AC-Netze anzupassen. Dadurch ist es möglich, dass man Transformatoren gleicher Bauart für weitere Anwendungsbereiche einsetzen kann, was der Flexibilität des obigen Energiewandlersystems zugute kommt.

Wie oben beschrieben, ist bei einer Ausbildung des Energiewandlersystems zur Verbindung von zwei AC-Netzen die Schaltung mit nur einem modularen Mehrpegelwandler nicht dazu geeignet, zwei AC-Netze mit gleicher Frequenz miteinander zu verbinden, da es nur möglich ist, eine relativ geringe Gleichtaktspannung aufzuschalten und somit nur eine geringe Leistung zwischen den AC-Netzen auszutauschen. Mit dem obigen Energiewandlersystem ist es hingegen möglich, zwei Netze mit gleicher Frequenz miteinander zu verbinden, da die Transformatorspannungen am Transformator ungleich der Netzfrequenz gewählt werden können.

Wie bereits eingangs beschrieben, müssen die Energiespeicher der Untermodule eine Blindleistung bereitstellen, deren Frequenz der Differenz der Frequenzen der angeschlossenen Netze entspricht. Die Kapazitäten der Energiespeicher des obigen Energiewandlersystems können jedoch klein gewählt werden, da die Grenzen der Transformatorspannungen und damit die Differenz dieser Frequenz und der Frequenz der AC-Netze hoch gewählt werden kann. Die mögliche Verringerung der Kapazität der Energiespeicher ist vorteilhaft, da die Energiespeicher einen erheblichen Teil der Kosten und des Volumens des Energiewandlersystems ausmachen.

Der Schutz des obigen Energiewandlersystems gegen Kurzschlussströme ist einfach zu realisieren. Bei einem Erdschluss im Transformator kann durch die beiden modularen Mehrpegelwandler ein Kurzschlussstrom verhindert werden, indem beide modularen Mehrpegelwandler sämtliche Halbleiterschalter in allen Untermodulen abschalten. Bei einem Energiewandlersystem mit nur einem modularen Mehrpegelwandler und einem Transformator mit direkter Netzanbindung würde ein Kurzschlussstrom aus dem AC-Netz und durch den Transformator in die Erdschlussstellen fließen, bis der Kurzschlussstrom durch einen Netztrenner abgeschaltet wird. Dies ist beim obigen Energiewandlersystem nicht möglich.

Ein weiterer Vorteil besteht darin, dass ein etwaiger eingangsseitiger oder ausgangsseitiger Netztrenner nicht darauf ausgelegt sein muss, einen Kurzschluss abzuschalten. Er kann im Prinzip auf das Schalten eines Stroms kleiner oder gleich dem nominalen Laststrom ausgelegt sein.

Bei einem doppelten Erdschluss eingangsseitig und ausgangsseitig eines der modularen Mehrpegelwandler des obigen Energiewandlersystems werden einzelne Zweige des betroffenen Mehrpegelwandlers überbrückt und es entsteht zunächst eine Überspannung über einem oder mehreren Wandlerzweigen dieses modularen Mehrpegelwandlers. Ein solcher Fall kann eintreten, wenn eines der AC-Netze schon auslegungsbedingt geerdet ist. Dies kann beispielsweise bei AC-Netzen, die als Transformatoren mit geerdetem sekundären Sternpunkt gespeist werden, oder bei Bahnnetzen der Fall sein. Die auftretende Überspannung aufgrund des doppelten Erdschlusses kann durch den zweiten modularen Mehrpegelwandler verhindert werden, indem dieser die Transformatorspannung auf Null setzt, während der vom doppelten Erdschluss betroffene erste modulare Mehrpegelwandler alle Halbleiterschalter abschaltet. Der zweite modulare Mehrpegelwandler kann die Transformatorspannung auf Null setzen, indem entweder die getaktete Ausgangsspannung Null beträgt oder indem alle Halbleiterschalter abgeschaltet werden. Ein Vorteil besteht darin, dass keiner der beiden modularen Mehrpegelwandler einen Hilfskreis zum schnellen Überbrücken der Untermodule benötigt, wie er beispielsweise für den einzelnen modularen Mehrpegelwandler mit oder ohne Transformator gemäß der Druckschrift WO 2010 69 401 A1 notwendig ist.

Bei Verwendung des obigen Energiewandlersystems für eine DC/DC-Wandlung können die Untermodule unipolar ausgebildet sein, d. h. mit einer einfachen Halbbrückenschaltung versehen sein. Dadurch ist es möglich, den Gesamtaufwand zum Aufbau des Energiewandlersystems deutlich zu reduzieren und weiterhin die bereits zuvor beschriebenen Vorteile zu nutzen.

Desweiteren ist der Schutz des Energiewandlersystems sehr einfach, da bei Erdschlüssen im Transformator die Kurzschlussströme durch einfaches Abschalten aller Halbleiterschalter in allen Untermodulen beider modularer Mehrpegelwandler verhindert werden können. Bei einem Erdschluss auf einer der DC-Seiten kann ein Kurzschlussstrom verhindert bzw. begrenzt werden, indem alle Halbleiterschalter in allen Untermodulen des zweiten modularen Mehrpegelwandlers abgeschaltet werden. In Kombination mit dem Abschalten aller Halbleiterschalter im ersten modularen Mehrpegelwandler führt das zu Transformatorspannungen von Null. Deshalb fließen weder über einen der modularen Mehrpegelwandler noch über den Transformator Kurzschlussströme und auf das Vorsehen von etwaigen Hilfsschaltungen zum Ableiten von Kurzschlussströmen zum Schutz der Halbleiterschalter und der Freilaufdioden kann verzichtet werden.

Weiterhin kann jede Wandlerstufe eine Anzahl von Eingangsanschlüssen und eine Anzahl von Ausgangsanschlüssen aufweisen, wobei in jeder Wandlerstufe jeder der Eingangsanschlüsse mit jedem der Ausgangsanschlüsse über einen Wandlerzweig verbunden ist.

Gemäß einer Ausführungsform können die Untermodule eine Halbbrückenschaltung oder eine H-Brückenschaltung aufweisen.

Das Energiewandlersystem kann eine Steuereinheit umfassen, die eine erste Untersteuereinheit zur Ansteuerung der ersten Wandlerstufe und eine zweite Untersteuereinheit zur Ansteuerung der zweiten Wandlerstufe aufweist, wobei die erste Untersteuereinheit die erste Wandlerstufe betreibt, um eine Transformatorspannung an dem Transformator anzulegen.

Insbesondere kann die Transformatorspannung eine Frequenz aufweisen, die größer ist als eine Frequenz des ersten Netzes und/oder des zweiten Netzes.

Weiterhin können die erste Untersteuereinheit und/oder die zweite Untersteuereinheit einen oder mehrere elektrische Zustände überwachen, um einen Kurzschlussstrom und/oder eine Überspannung festzustellen, wobei diejenige Wandlerstufe, die einen Kurzschlussstrom und/oder eine Überspannung feststellt, eine Fehlerinformation an die jeweils andere Untersteuereinheit kommuniziert.

Es kann vorgesehen sein, dass die erste und/oder die zweite Untersteuereinheit so ausgebildet sind, um ein Abschalten aller Untermodule oder ein Kurzschließen aller Untermodule durchzuführen, wenn die betreffende Untersteuereinheit einen Kurzschlussstrom und/oder eine Überspannung feststellt oder die Fehlerinformation empfängt.

Weiterhin kann die zweite Untersteuereinheit ausgebildet sein, um während einer Einschaltphase die Energiespeicher der Untermodule der zweiten Wandlerstufe aufzuladen, und wobei die erste Untersteuereinheit ausgebildet ist, um während der Einschaltphase die erste Wandlerstufe anzusteuern, so dass eine getaktete Primärspannung an den Transformator angelegt wird, wobei ein Sekundärstrom des Transformators beim Aufladen der Energiespeicher der Untermodule der zweiten Wandlerstufe durch Wahl eines Tastverhältnisses für die Primärspannung begrenzt wird. Das Tastverhältnis entspricht bei einer zyklischen Ansteuerung dem Verhältnis der Einschaltzeitdauer der Primärspannung zu der gesamten Zykluszeit.

Der Vorteil liegt darin, dass nur noch die erste Wandlerstufe eine zusätzliche Ladeeinrichtung benötigt. Dadurch, dass es möglich ist, dass die erste Wandlerstufe die zweite Wandlerstufe auflädt, kann für die zweite Wandlerstufe auf die Ladeeinrichtung verzichtet werden.

Gemäß einer Ausführungsform kann die zweite Untersteuereinheit ausgebildet sein, um in einem ersten Zeitabschnitt der Einschaltphase alle Untermodule der zweiten Wandlerstufe hochohmig zu schalten, um die Energiespeicher der Untermodule durch einen Stromfluss durch die jeweiligen Freilaufdioden aufgrund der Sekundärspannung auf eine Teilspannung vorzuladen.

Die Steuereinheit kann ausgebildet sein, um während eines zweiten, auf den ersten folgenden Zeitabschnitts der Einschaltphase Untermodule von einem oder mehreren seriell verschalteten Wandlerzweigen, über denen jeweils eine Sekundärspannung des Transformators anliegt, nacheinander so zu schalten, dass die Energiespeicher der Untermodule nacheinander geladen werden, und um dasjenige Untermodul, dessen Energiespeicher geladen werden soll, hochohmig zu schalten, während die übrigen Untermodule des betreffenden Wandlerzweigs kurzgeschlossen werden, so dass der Energiespeicher des Untermoduls, dessen Energiespeicher geladen werden soll, durch einen Stromfluss durch eine seiner Freilaufdioden geladen wird.

Die Steuereinheit kann alternativ ausgebildet sein, um während eines zweiten, auf den ersten folgenden Zeitabschnitts der Einschaltphase zum Aufladen der Energiespeicher der zweiten Wandlerstufe die Transformatorspannung bei voller Ausgangsschaltfrequenz kontinuierlich von Null auf eine vorgegebene Nennspannung zu erhöhen.

Gemäß einem weiteren Aspekt ist ein Verfahren zum Betreiben des obigen Energiewandlersystems vorgesehen, wobei während einer Einschaltphase, während der die Energiespeicher der Untermodule aufgeladen werden, die erste Wandlerstufe angesteuert wird, um eine getaktete Primärspannung an den Transformator anzulegen, wobei ein Sekundärstrom des Transformators beim Aufladen der Energiespeicher der Untermodule der zweiten Wandlerstufe durch Wahl eines Tastverhältnisses für die Primärspannung bzw. durch Regelung der Primärspannung begrenzt wird.

Weiterhin kann das Tastverhältnis abhängig von der Höhe des Sekundärstroms angepasst werden.

Es kann vorgesehen sein, dass in einem ersten Zeitabschnitt der Einschaltphase alle Untermodule der zweiten Wandlerstufe hochohmig geschaltet sind, um die Energiespeicher der Untermodule durch einen Stromfluss durch die jeweiligen Freilaufdioden aufgrund der Sekundärspannung auf eine Teilspannung vorzuladen.

Weiterhin können während eines zweiten, auf den ersten folgenden Zeitabschnitts der Einschaltphase Untermodule von einem oder mehreren seriell verschalteten Wandlerzweigen, über denen jeweils eine Sekundärspannung des Transformators anliegt, nacheinander so geschaltet werden, dass die Energiespeicher der Untermodule einzeln nacheinander geladen werden, wobei dasjenige Untermodul, dessen Energiespeicher geladen werden soll, hochohmig geschaltet wird, während die übrigen Untermodule des betreffenden Wandlerzweigs kurzgeschlossen werden, so dass der Energiespeicher des Untermoduls, dessen Energiespeicher geladen werden soll, durch einen Stromfluss durch eine seiner Freilaufdioden geladen wird.

Gemäß einer weiteren Ausführungsform kann das Tastverhältnis der Primärspannung bzw. die Höhe der Primärspannung während der Einschaltphase der zweiten Wandlerstufe so eingestellt bzw. geregelt werden, dass der Sekundärstrom einen vorgegebenen Mindestwert nicht unterschreitet bzw. einem vorgegebenen Wert entspricht.

Gemäß einem weiteren Aspekt ist ein Verfahren zum Betreiben des obigen Energiewandlersystems mit Untersteuereinheiten vorgesehen, wobei die erste Untersteuereinheit und/oder die zweite Untersteuereinheit einen oder mehrere elektrische Zustände überwacht, um einen Kurzschlussstrom und/oder eine Überspannung festzustellen, wobei diejenige Wandlerstufe, die einen Kurzschlussstrom und/oder eine Überspannung feststellt, eine Fehlerinformation an die jeweils andere Untersteuereinheit kommuniziert.

Insbesondere können die erste und/oder die zweite Untersteuereinheit so ausgebildet sein, um ein Abschalten aller Untermodule oder ein Kurzschließen aller Untermodule durchzuführen, wenn die betreffende Untersteuereinheit einen Kurzschlussstrom und/oder eine Überspannung feststellt oder die Fehlerinformation empfängt.

Gemäß einem weiteren Aspekt ist ein Energiewandlersystem zum Verbinden eines ersten Netzes mit einem zweiten Netz vorgesehen. Das Energiewandlersystem umfasst:

- eine erste Wandlerstufe, die als modulare Mehrpegelwandler aufgebaut ist, wobei jeder modulare Mehrpegelwandler Wandlerzweige mit einer Serienschaltung von mehreren Untermodulen mit jeweils einem Energiespeicher aufweist, wobei die Untermodule Leistungshalbleiterschalter mit parallelen Freilaufdioden aufweisen;
- einen Transformator, der die erste Wandlerstufe und die zweite Wandlerstufe miteinander koppelt;
- eine Diodenbrücke zum Gleichrichten einer sekundärseitigen Wechselspannung des Transformators, um eine Ausgangsgleichspannung bereitzustellen.

**Kurze Beschreibung der Zeichnungen**

Bevorzugte Ausführungsformen der vorliegenden Erfindung werden nachfolgend anhand der beigefügten Zeichnungen näher erläutert. Es zeigen:

Figur 1            eine schematische Darstellung eines Energiewandlersystems mit zwei über einen Transformator verbundenen modularen Mehrpegelwandlern;

Figur 2            eine Ausführungsform eines Energiewandlersystems mit zwei dreiphasigen Wandlerstufen mit einem DC- oder zweiphasigen AC-Eingang und einem DC- bzw. zweiphasigen AC-Ausgang;

Figur 3            eine Ausführungsform eines Energiewandlersystems mit zwei dreiphasigen AC/AC-Wandlerstufen mit sowohl dreiphasigen Einals auch Ausgängen;

Figur 4            eine weitere Ausführungsform eines Energiewandlersystems mit DC/AC- und AC/DC-Wandlern, die über einen einphasigen Transformator miteinander verbunden sind;

Figuren 5a und 5b      Darstellung von zwei möglichen Ausführungsformen für den Aufbau der Untermodule der modularen Mehrpegelwandler der Figuren 2 bis 4;

Figur 6            eine weitere Ausführungsform eines Energiewandlersystems mit einer ersten Wandlerstufe und einer ausgangsseitigen Diodenbrücke, die über einen dreiphasigen Transformator miteinander verbunden sind;

Figur 7            eine Darstellung der Verläufe der Primärspannung, der Sekundärspannung und des Sekundärstroms des Transformators zur Veranschaulichung einer Strombegrenzung während eins Ladevorgangs;

Figur 8a und 8b        eine Darstellung der Strompfade durch die passiv geschalteten Untermodule während einer Einschaltphase bei einer positiven und einer negativen Halbwelle der Sekundärspannung des Transformators.

Wege zur Ausführung der Erfindung

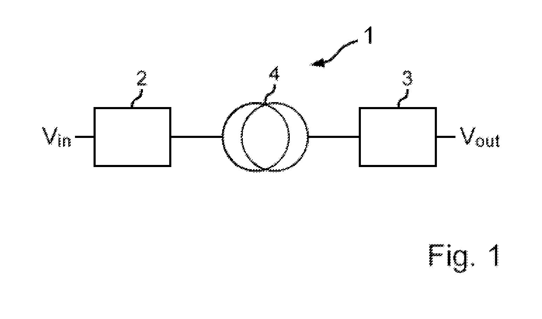

Figur 1 zeigt eine Blockdarstellung eines Energiewandlersystems 1 zum Wandeln einer Eingangsspannung $V_{in}$, einer Eingangswechselspannung bzw. Eingangsgleichspannung, in eine Ausgangsspannung $V_{out}$, eine Ausgangswechselspannung bzw. Ausgangsgleichspannung. Das Energiewandlersystem 1 umfasst eine erste Wandlerstufe 2, an deren Eingang die Eingangsspannung $V_{in}$ angelegt ist und eine zweite Wandlerstufe 3, an deren Ausgang die Ausgangsspannung $V_{out}$ abgreifbar ist. Die beiden Wandlerstufen 2 und 3 sind über einen Transformator 4 miteinander verbunden.

Die Wandlerstufen 2 und 3 sind im vorliegenden Ausführungsbeispiel als modulare Mehrpegelwandler ausgebildet. Modulare Mehrpegelwandler sind in der Regel bidirektionale Wandler, so dass im Gegensatz zu obiger Beschreibung an die zweite Wandlerstufe 2 auch ausgangsseitig eine Eingangsspannung angelegt werden kann und eingangsseitig der ersten Wandlerstufe 2 die Ausgangsspannung $V_{out}$ abgreifbar ist.

Die Wandlerstufen 2, 3 sind über den Transformator 4 verbunden, der ein Übertragungsverhältnis von 1 : 1 oder ein davon verschiedenes Übertragungsverhältnis aufweisen kann. Der Transformator 4 kann als ein einzelner Transformator mit einer oder mehreren Phasen oder als mehrere einzelne Transformatoren ausgebildet sein, die in verschiedenen Konfigurationen miteinander verbunden sind, um eine Primärspannung $V_{AC1}$ in eine Sekundärspannung $V_{AC2}$ zu transformieren.

Im Allgemeinen können die Ein- und Ausgänge des Wandlers 1 mit einem Netzwerk, einem Generator oder einer Last verbunden sein. Die Eingangsspannung $V_{in}$ kann einer einphasigen oder mehrphasigen Wechselspannung oder einer Gleichspannung entsprechen. Analog kann die Ausgangsspannung einer einphasigen oder mehrphasigen Wechselspannung oder einer Gleichspannung entsprechen. Mit anderen Worten kann je nach Betrieb des Wandlers 1 sowohl die Eingangsseite für das Anlegen einer Wechselspannung oder Gleichspannung als auch die Ausgangsseite zum Ausgeben einer Wechselspannung oder Gleichspannung ausgelegt sein.

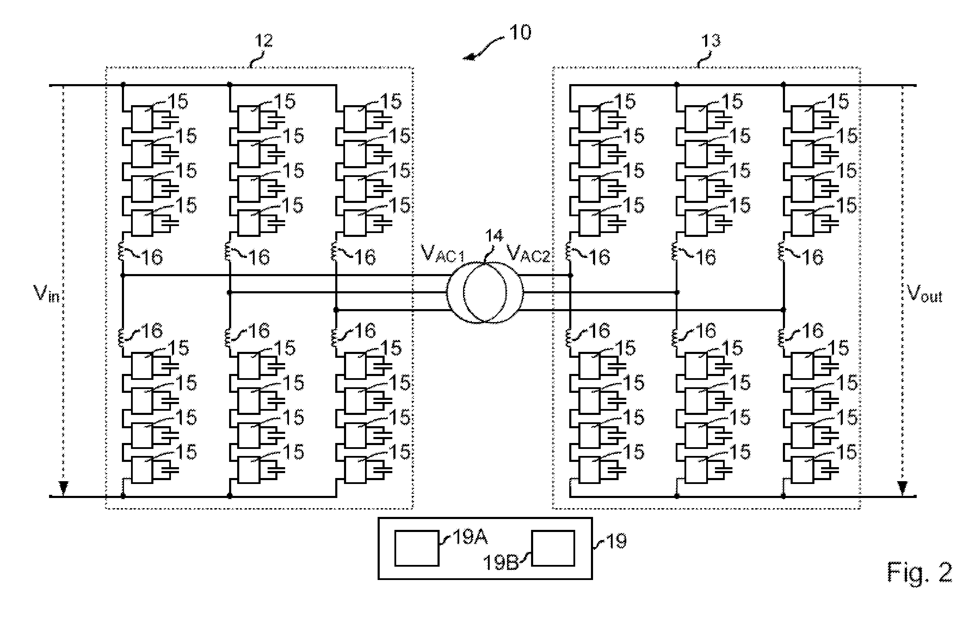

In Figur 2 ist eine beispielhafte Ausführungsform eines Wandlers 10 dargestellt. In der Ausführungsform der Figur 2 umfasst der Wandler 10 eine erste Wandlerstufe 12, die als DC/AC-Wandler ausgebildet ist und eine Eingangs-gleichspannung $V_{in}$ in eine dreiphasige Primärspannung $V_{AC1}$ zum Anlegen an eine Primärseite eines Transformators 14 ausgibt.

Die erste Wandlerstufe 12 ist mit Untermodulen 15 aufgebaut, wobei jeweils vier in Reihe geschaltete Untermodule 15 seriell mit einer Induktivität 6 einen Zweig der Wandlerstufe 2 bilden. Dabei wird eine Phasenspannung jeweils an einem Knoten abgegriffen, der sich zwischen zwei seriell verschalteten Zweigen befindet. Der dreiphasige Ausgang der ersten Wandlerstufe 12 ist über den dreiphasigen Transformator 14 mit der zweiten Wandlerstufe 13 verbunden. Die Sekundärseite des Transformators 14 liefert im gezeigten Ausführungsbeispiel eine dreiphasige Sekundärspannung.

Die dreiphasige Sekundärspannung ist an eine zweite Wandlerstufe 13 angelegt, die als AC/DC-Wandler ausgebildet ist. Im dargestellten Ausführungsbeispiel ist die zweite Wandlerstufe 13 im Wesentlichen identisch zur ersten Wandlerstufe 12 ausgebildet. Alternativ können die Topologien der Wandlerstufen 2, 3 voneinander abweichen, insbesondere hinsichtlich der Anzahl der verwendeten Untermodule 15, auf die nachfolgend detaillierter eingegangen wird, und der Art der Wandlung, d. h. AC/DC-Wandler, DC/AC-Wandler, AC/AC-Wandler.

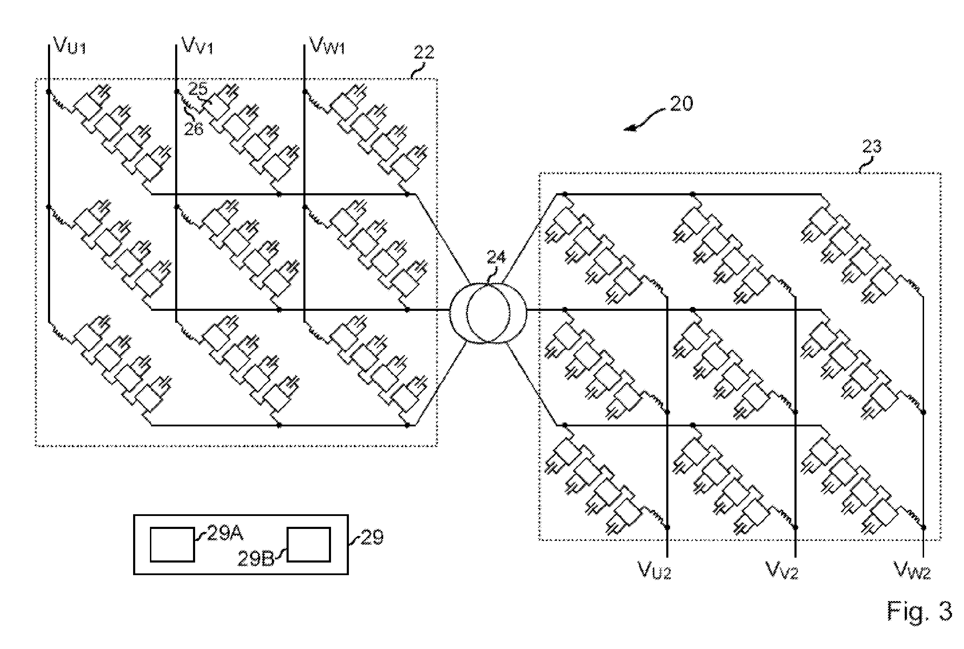

In Figur 3 ist eine weitere Ausführungsform für einen Wandler 20 dargestellt, bei der eine erste Wandlerstufe 22 und eine zweite Wandlerstufe 23 jeweils als AC/AC-Wandler in der modularen mehrstufigen Topologie ausgebildet sind. Alle Eingangsanschlüsse der ersten Wandlerstufe 12, die mit dem eingangsseitigen Netz verbunden sind, sind über Wandlerzweige aus seriell verschalteten Untermodulen 25 und einer Induktivität 26 mit allen Anschlüssen der Primärseite des Transformators 24 verbunden. Das eingangsseitige Netz ist im gezeigten Ausführungsbeispiel dreiphasig und stellt die Phasenspannungen $V_{U1}$, $V_{v1}$, $V_{w1}$ bereit. Die zweite Wandlerstufe 23 ist entsprechend aufgebaut, wobei hier die Anschlüsse der Sekundärseite des Transformators 24 die Eingangsseite bilden und die Ausgangsanschlüsse der zweiten Wandlerstufe 23 mit dem ausgangsseitigen Netz verbunden sind. Das ausgangsseitige Netz ist ebenfalls dreiphasig und stellt die Phasenspannungen $V_{U2}$, $V_{v2}$, $V_{w2}$ bereit.

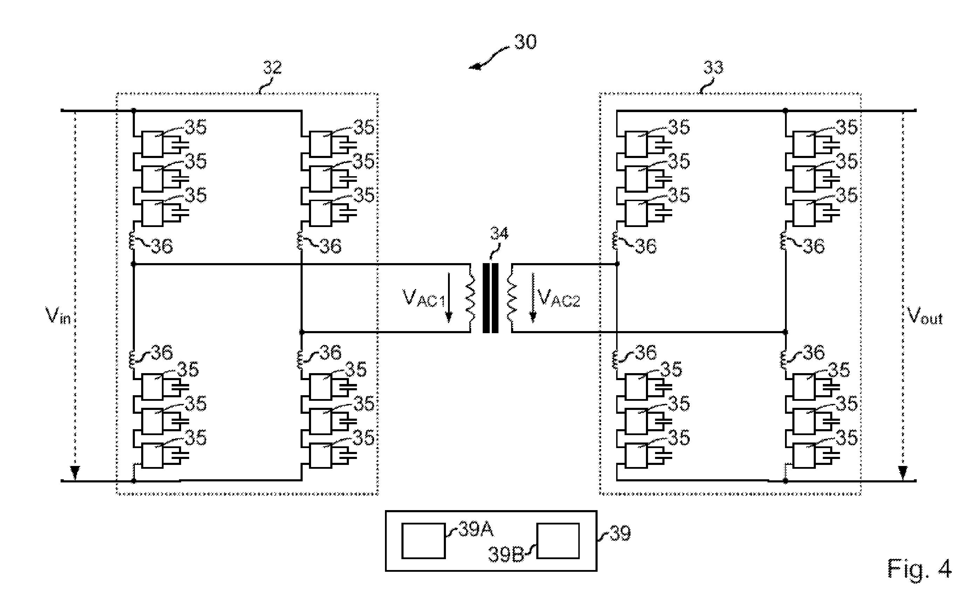

In Figur 4 ist eine weitere Ausführungsform eines Wandlers 30 dargestellt, wobei ein einphasiger Transformator 34 vorgesehen ist. Eine erste Wandlerstufe 32 ist als prinzipiell als AC/AC-Wandler und eine zweite Wandlerstufe 33 ebenfalls als AC/AC-Wandler ausgebildet. Beide Wandlerstufen 32, 33 sind als H-Brückenschaltungen ausgebildet, deren Zweige jeweils drei seriell verschaltete Untermodule 35 und eine Induktivität 36 aufweisen. Die einzelnen Inverterzweige sind sowohl bei der ersten Wandlerstufe 32 als auch bei der zweiten Wandlerstufe 33 in Form einer H-Brückenschaltung ausgebildet. Falls nur eine Gleichspannung am Ausgang der zweiten Wandlerstufe 33 benötigt wird, genügt eine Anordnung der Wandlerzweige in eine Halbbrücken-Konfiguration. Es ist jedoch darauf zu achten, dass die Gleichspannung höher sein muss als die Wechselspannung, da man ansonsten H-Brücken benötigt. Für die erste Wandlerstufe 32 wäre es darüber hinaus möglich, nur Halbbrücken für die Untermodule 35 zu verwenden, vorausgesetzt es liegt eine Gleichspannung am Eingang an, die höher ist als die Transformatorspannung. In diesem Fall sind sowohl die erste Wandlerstufe 32 als auch die zweite Wandlerstufe 33 als DC/AC-Wandler bzw. als AC/DC-Wandler ausgebildet. Die Induktivitäten 16, 26, 36, die in Reihe zu den in Serie geschalteten Untermodulen 15, 25, 35 geschaltet sind, werden benötigt, um den Leistungsfluss durch einen Zweig durch die Regelung der Zeigströme mittels einer geeigneten Ansteuerschaltung zu steuern, und können zusätzlich als Schutz gegen hohe Stromgradienten dienen.

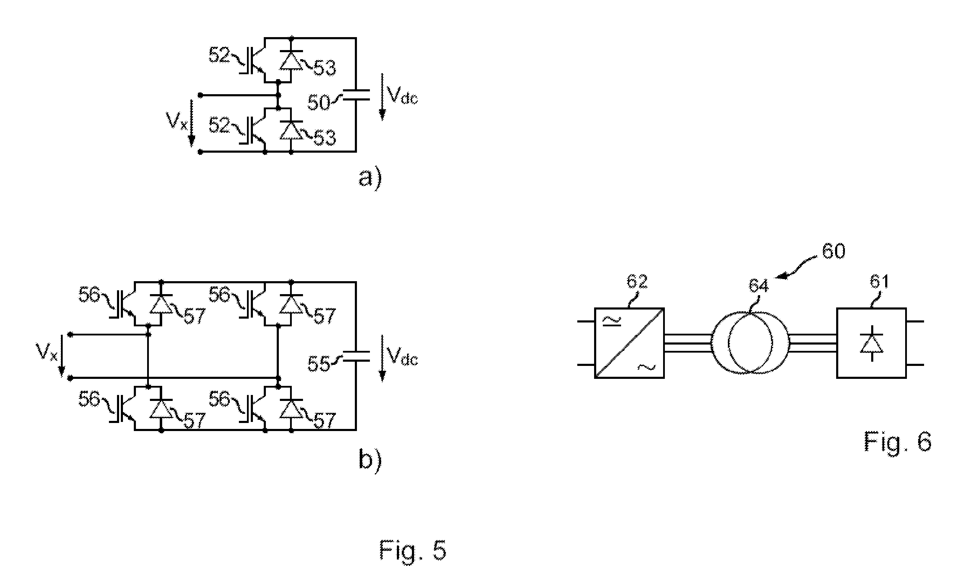

In den Figuren 5a und 5b sind zwei Beispiele für Untermodule 15, 25, 35 dargestellt. Das Untermodul 15, 25, 35 der Figur 5a entspricht einem unipolaren Untermodul und besteht im Wesentlichen aus einer Halbbrückenschaltung mit zwei in Reihe geschalteten Leistungshalbleiterschaltern 52, die jeweils eine dazu parallel geschaltete Freilaufdiode 53 aufweisen. Die Freilaufdiode 53 kann als diskretes Bauelement oder mit dem Leistungshalbleiterschalter 52 integriert ausgeführt sein. Parallel zu der Reihenschaltung der beiden Leistungshalbleiterschalter 52 ist ein Energiespeicher 50 in Form einer Kapazität geschaltet. Die Leistungshalbleiterschalter 52 können als IGBT, IGCT, MOSFET oder als sonstiger steuerbarer Leistungstransistor ausgebildet sein. Bei den Leistungshalbleiterschaltern 52 wird im Wesentlichen deren Schaltfunktion, d. h. das Schließen und Öffnen einer leitenden Verbindung, genutzt. Anschlüsse des Untermoduls 15, 25, 35 werden an einem Knoten zwischen den Leistungshalbleiterschaltern 52 und einem Anschluss des Energiespeichers 50 vorgesehen.

In Figur 5b ist eine weitere Ausführungsform des Untermoduls 15, 25, 35 dargestellt. Das Untermodul 15, 25, 35 der Figur 5b entspricht einem bipolaren Untermodul und ist als H-Brückenschaltung ausgebildet und weist zwei zueinander parallel geschaltete Reihenschaltungen von Leistungshalbleiterschaltern 56 auf. Jeder der Leistungshalbleiterschalter 56 ist mit einer Freilaufdiode 57 versehen, die entweder als diskretes Bauelement oder integriert mit dem Leistungshalbleiterschalter 56 ausgebildet sein kann. An den Knoten zwischen den beiden Leistungshalbleiterschaltern 56 der Reihenschaltungen werden die Anschlüsse zum Verbinden des Untermoduls 15, 25, 35 in der Wandlerstufe vorgesehen. Die Reihenschaltungen der Inverterschaltungen sind parallel mit einem Energiespeicher 55 in Form eines Speicherkondensators verschaltet.

Jedes der Untermodule 15, 25, 35 kann mehrere Zustände einnehmen. In einem ersten Zustand kann das Untermodul 15, 25, 35 so geschaltet werden, dass seine Anschlüsse mit dem Energiespeicher 50, 55 verbunden werden. Auf diese Weise kann der Energiespeicher geladen oder entladen werden, d. h. die Ladung kann frei zu oder von dem Energiespeicher 50, 55 fließen. In einem zweiten Zustand kann das Untermodul 15, 25, 35 so geschaltet sein, dass die Anschlüsse kurzgeschlossen bzw. niederohmig sind, während der Energiespeicher 50, 55 die in ihm gespeicherte Ladung beibehält. In einem dritten Zustand kann das Untermodul 15, 25, 35 als passiver Gleichrichter geschaltet werden, d. h. die Leistungshalbleiterschalter sind geöffnet. Ein Strom durch das Untermodul 15, 25, 35 kann nur über den Leistungshalbleiterschaltern 52, 56 zugeordnete Freilaufdioden 53, 57 fließen, d. h. die über den Anschlüssen abfallende Spannung ist abhängig von der Richtung des Stromflusses. Der Energiespeicher 50, 55 kann in dem dritten Zustand nur durch einen Stromfluss durch die Freilaufdiode 53, 57 geladen, nicht jedoch über die Anschlüsse entladen werden.

Jeder der Energiespeicher 50, 55 der Untermodule 15, 25, 35 in den Wandlerstufen 12, 22, 32, 13, 23, 33 ist innerhalb eines Wandlerzweigs im Wesentlichen auf die gleiche Spannung aufgeladen.

Wie in den Ausführungsformen der Figuren 2 bis 4 dargestellt, können die erste und zweite Wandlerstufe 12, 13, 22, 23, 32, 33 mit mehreren Zweigen mit einer Anzahl von Untermodulen 15, 25, 35 in einer Brückenschaltung oder Matrixanordnung aufgebaut sein. Die Anzahl der Eingangsphasen kann sich von der Anzahl der Ausgangsphasen unterscheiden. Auch kann die Eingangsspannung als Gleich- oder Wechselspannung bereitgestellt werden und die Ausgangsspannung kann, davon unabhängig und nur bestimmt durch ein Ansteuerschema, ebenfalls einer Gleichspannung oder einer ein- oder mehrphasigen Wechselspannung entsprechen.

Die Untermodule 15, 25, 35 der Wandler 1, 10, 20, 30 der Figuren 2, 3 und 4 werden jeweils so durch eine Steuereinheit 19, 29, 39 gesteuert, dass diese die Ansteuerung der darin befindlichen Leistungshalbleiterschalter 52, 56 für die erste und die zweite Wandlerstufe 12, 13, 22, 23, 32, 33 übernimmt. Im eingeschwungenen Betrieb des Wandlers 1 steuert die Steuereinheit 19, 29, 39 die einzelnen Leistungshalbleiterschalter 52, 56 an, um entsprechende Schaltzustände in den Untermodulen 15, 25, 35 einzustellen, um so die gewünschte Zwischenspannung als Primärspannung für den Transformator 14, 24, 34 sowie die Ausgangsspannung $V_{out}$ sowohl der ersten Wandlerstufe 12, 22, 32 als auch der zweiten Wandlerstufe 13, 23, 33 einzustellen. Auch andere Kriterien der Ansteuerung der Wandlerstufen 12, 13, 22, 23, 32, 33 sind denkbar. Weiterhin kann die Steuereinheit 19, 29, 39 Schaltstrategien anwenden, die es ermöglichen, die Ladung in den Energiespeichern 50, 55 der Untermodule 15, 25, 35 weitestgehend konstant zu halten.

Die Steuereinheiten 19, 29, 39 weisen Untersteuereinheiten 19A; 19B; 29A, 29B; 39A, 39B auf, die jeweils einer der Wandlerstufen 12, 13, 22, 23, 32, 33 zugeordnet sind und diese separat einstellen. Die Untersteuereinheiten 19A; 19B; 29A, 29B; 39A, 39B realisieren eine Schutzfunktion. Dazu ist jeder Wandlerzweig der Wandlerstufen 12, 13, 22, 23, 32, 33 mit einer (nicht gezeigten) Messeinrichtung zur Messung aller Energiespeicherspannungen der Energiespeicher 50, 55 versehen und weiterhin mit einer Strommesseinrichtung zur Messung eines Stroms im Wandlerzweig.

Jede der Untersteuereinheiten 19A; 19B; 29A, 29B; 39A, 39B führt eine Überwachung der zugeordneten Wandlerstufe 12, 13, 22, 23, 32, 33 durch. Durch die Messung der Spannung an den Energiespeichern 50, 55 wird die Energiespeicherspannung festgestellt und diese mit einem Schwellenwert verglichen, um festzustellen, ob die Energiespeicherspannung einer Überspannung entspricht. Es ist dabei grundsätzlich unerheblich, ob die Überspannung durch einen Erdschlussfehler oder durch eine temporäre Überspannung an den Netzanschlüssen verursacht wird. Ein Kurzschlussstrom kann z.B. durch die Strommesseinrichtung in den Wandlerzweigen festgestellt werden.

Die Schutzfunktion wird durch die Steuereinheiten 19, 29, 39 realisiert, die die durch die Untersteuereinheiten 19A; 19B; 29A, 29B; 39A, 39B realisierte Schutzfunktion beider Wandlerstufen 12, 13, 22, 23, 32, 33 verbindet. Die Untersteuereinheiten 19A; 19B; 29A, 29B; 39A, 39B enthalten jeweils Fehlerschutzeinrichtungen bzw. Funktionen, die sowohl schaltungstechnisch als auch programmtechnisch realisiert sein können und die aus Messwerten für die Energiespeicherspannungen und Zweigströmen einen Fehler detektieren und eine Reaktion auf diesen Fehler veranlassen können. Die Untersteuereinheiten 19A; 19B, 29A; 29B, 39A; 39B melden der Steuereinheit 19, 29, 39 die detektierten Fehler, die an die jeweilige Untersteuereinheit 19A; 19B, 29A; 29B, 39A; 39B der jeweils anderen Wandlerstufe 12, 13, 22, 23, 32, 33 weiter geleitet werden. Die Untersteuereinheiten 19A; 19B, 29A; 29B, 39A; 39B können dann auf eine entsprechende Fehlermeldung mit einem Abschalten, d. h. Öffnen aller Halbleiterschalter der Untermodule oder einem entsprechenden Kurzschließen der Halbleiterschalter der Untermodule reagieren, um so entweder den Kurzschlussstrom zu unterbrechen oder die Transformatoranschlüsse kurzzuschließen.

Die Kommunikation der Untersteuereinheiten 19A; 19B; 29A, 29B; 39A, 39B ist notwendig, da eine Überspannung bzw. ein Kurzschlussstrom in einer der Wandlerstufen 12, 13, 22, 23, 32, 33 nicht notwendigerweise eine Überspannung bzw. einen Kurzschlussstrom in der jeweils anderen Wandlerstufe 12, 13, 22, 23, 32, 33 verursacht. Durch Bereitstellen einer Möglichkeit der Kommunikation zwischen den Untersteuereinheiten 19A; 19B; 29A, 29B; 39A, 39B der Wandlerstufen 12, 13, 22, 23, 32, 33 ist es möglich, dass auch bei Auftreten eines Fehlers in einer der Wandlerstufen 12, 13, 22, 23, 32, 33 entsprechende Maßnahmen in der jeweils anderen Wandlerstufe 12, 13, 22, 23, 32, 33 durchgeführt werden können.

Die Energiewandlersysteme 10, 20, 30 der obigen Topologie können sowohl mit unipolaren als auch mit bipolaren Untermodulen 15, 25, 35 ausgeführt sein. Eine Ausführung der Wandlerstufen mit bipolaren Untermodulen ist grundsätzlich immer möglich. Wenn die Spannungen in der Eingangsseite des Energiewandlersystems immer größer sind als die Spannungen der Ausgangsseite, kann ein modularer Mehrpegelwandler mit unipolaren Untermodulen verwendet werden. Dies ist im Normalfall nur bei der Verbindung eines DC-Netzes mit einer konstanten Spannung und eines AC-Netzes der Fall, wobei die DC-Spannung größer als die Amplitude der AC-Spannung ist.

Fig. 6 zeigt ein Energiewandlersystem 60 für Anwendungen, in denen nur ein Leistungsfluss von einem AC- oder DC-Netz in ein DC-Netz erforderlich ist. Das Energiewandlersystem 60 weist eine Diodenbrücke 61 auf, die die zweite Wandlerstufe 3 ersetzt. Die erste Wandlerstufe 62 und der Transformator 64 können, wie in den obigen Ausführungsbeispielen aufgeführt, ausgebildet sein. Ausgangsseitig der Diodenbrücke 61 ist immer ein DC-Netz angeschlossen. Grundsätzlich kann das DC-Netz variabel sein, da die sekundärseitige Transformatorspannung auf der Seite der Diodenbrücke 61 über die erste Wandlerstufe 2 eingeprägt wird.

Wie zuvor für die zweite Wandlerstufe ausgeführt, kann auch die Diodenbrücke 61 mit einer beliebigen Anzahl von eingangsseitigen Phasenanschlüssen ausgebildet sein. Die zuvor beschriebenen Vorteile bezüglich der frei einstellbaren Transformatorfrequenz, die sowohl zu einer geringeren Baugröße des Transformators 64 als auch der Verwendung kleinerer Kapazitäten des Energiespeichers führen können und des einfachen Schutzes bei Erdschluss im Transformator durch Sperren der ersten Wandlerstufe durch Öffnen aller Halbleiterschalter der Untermodule, bestehen weiterhin.

Auch kann ein Schutz der ersten Wandlerstufe 2 bei Erdschluss auf der DC-Seite der Wandlerstufe durch automatisches Sperren der Diodenbrücke sowie ein Schutz der Diodenbrücke bei Erdschluss auf dem ausgangsseitigen DC-Netz ebenfalls durch Öffnen aller Halbleiterschalter der ersten Wandlerstufe erreicht werden.

Um die Betriebsfähigkeit des Energiewandlersystems 1 herzustellen, müssen die Energiespeicher 50, 55 der einzelnen Untermodule 15, 25, 35 auf eine Betriebsladung aufgeladen werden. Dies erfolgt während einer so genannten Einschaltphase. Zu Beginn der Einschaltphase tragen die einzelnen Energiespeicher 50, 55 jedoch noch keine Betriebsladung, so dass ein Teil der in der Regel verwendeten Leistungshalbleiterschalter 52, 56, wie IGBTs und dergleichen, nicht funktionsfähig sind, da bei entladenen Energiespeichern keine Drain-Source-Spannung anliegt. Dieses betrifft insbesondere diejenigen Leistungshalbleiterschalter 52, 56 des Untermoduls 15, 25, 35, die nicht unmittelbar zwischen den Anschlüssen des Untermoduls 15, 25, 35 angeordnet sind. Daher können diese während dieser Phase nicht durch die Steuereinheit 19, 29, 39 geschaltet werden.

Im Folgenden wird ein Verfahren zum Betreiben des Wandlers während einer Einschaltphase am Ausführungsbeispiel des Wandlers 30 der Figur 4 dargestellt. Grundsätzlich sind die nachfolgend beschriebenen Ladeverfahren auch auf die Wandler der Figuren 2 und 3 anwendbar. Die Wandlerstufen 32, 33 des Wandlers 30 sind mit Untermodulen 35 aufgebaut, die der H-Brückenschaltung der Figur 5b entsprechen. Selbstverständlich könnte der Wandler 30 auch mit Untermodulen aufgebaut sein, die der Halbbrückenschaltung der Figur 5a entsprechen. Das untenstehende Verfahren ist ferner analog auch auf die Ausführungsformen der Figuren 2 und 3 anwendbar.

Grundsätzlich kann das Aufladen der Energiespeicher 50, 55 der Wandlerstufen 32, 33 sowohl seitens des Eingangs der ersten Wandlerstufe 32 als auch seitens des Ausgangs der zweiten Wandlerstufe 33 erfolgen, da der vorgestellte Wandler 30 in der Regel bidirektional verwendet werden kann. Im Folgenden wird jedoch von einem unidirektionalen Betrieb ausgegangen, bei dem die Eingangsseite des Wandlers 30 eingangsseitig der ersten Wandlerstufe 32 und die Ausgangsseite des Wandlers 30 ausgangsseitig der zweiten Wandlerstufe 33 vorliegt.

Um die Energiespeicher 50, 55 der ersten Wandlerstufe 32 aufzuladen wird zunächst eine Hilfsladeschaltung an den Eingang der ersten Wandlerstufe 32 angelegt und die dort später anzulegende Netzspannung abgekoppelt. Die Hilfsladeschaltung ist vorzugsweise mit einer separaten Spannungsquelle mit einer gegenüber der Netzspannung reduzierten Spannung und mit einem Innenwiderstand versehen, um während der Einschaltphase den Strom in die Energiespeicher 50, 55 zu begrenzen. Anstelle der separaten Spannungsquelle kann auch ein Ladewiderstand zwischen die Netzspannung und den Eingang der ersten Wandlerstufe 32 geschaltet werden, der zur Strombegrenzung dient.

Die Untermodule 35 der ersten Wandlerstufe 32, die mit der Hilfsladeschaltung verbunden sind, werden gleichzeitig aufgeladen. Dies wird durch einen Stromfluss über die Freilaufdioden ermöglicht.

In dem Fall, dass die Hilfsladeschaltung eine Ladespannung in Höhe der maximalen Nennspannung des Netzes erzeugt, sind am Ende dieses Schritts alle Energiespeicher der Untermodule mit einer bestimmten Spannung aufgeladen, die kleiner oder gleich der halben eingangsseitig anliegenden Spannung ist. Diese Spannung reicht aus, um die Hilfsspannungen in den Untermodulen zu aktivieren und die Untermodule in den aktiven Zustand zu schalten.

Das weitere Aufladen der Untermodule bis auf die Nennspannung kann mit zwei verschiedenen Strategien erfolgen, und zwar ungeregelt oder geregelt. Beim ungeregelten Aufladen können die Untermodule zu Beginn dieses Vorgangs mit voller Schaltfrequenz für sehr kurze Zeiten in den Strompfad der Wandlerzweige geschaltet werden und dann wird langsam die Einschaltdauer erhöht. Zum Ende dieses Vorgangs werden alle Untermodule zueinander versetzt mit einem Verhältnis der Einschaltdauer zur Gesamtdauer von 0,5 betrieben, und zwar so, dass zu jeder Zeit die Hälfte aller Untermodule eines Wandlerzweigs in den Zweigstrompfad geschaltet ist. Alle Untermodule werden dadurch auf ihre Nennspannung aufgeladen.

Beim geregelten Aufladen werden die Untermodule durch die Zweigenergieregelung aufgeladen, die beispielsweise in A. Antonopoulos et al., "On Dynamics and Voltage Control of the Modular Multilevel Converter", EPE 2009, offenbart ist. Dieses Vorgehen hat den Vorteil, dass die Regelung des Normalbetriebs ohne Zusatzaufwand auch für das initiale Aufladen der Energiespeicher der Untermodule verwendet werden kann.

Im Fall, dass die Untermodule eine externe Hilfsspannungsversorgung haben und somit im spannungslosen Zustand steuerbar sind, kann eine Hilfsladeschaltung mit einer Ladespannung verwendet werden, die nicht größer als die Nennspannung eines Untermoduls ist. Um die Energiespeicher der Untermodule 35 der ersten Wandlerstufe 32 in der gesamten Höhe der Eingangsspannung aufzuladen, ist es notwendig, die Wandlerzweige so zu schalten, dass der Energiespeicher 50, 55 nur eines der Untermodule 35 in dem Strompfad vorgesehen ist. Daher wird eines der Untermodule 35 hochohmig geschaltet, so dass der Energiespeicher 55 über die Freilaufdiode 57 geladen werden kann und die übrigen Untermodule 35 des betreffenden Strompfades werden in den zweiten Zustand versetzt, in dem sie leitend geschaltet sind, d. h. zwischen ihren Anschlüssen liegt eine Spannung von 0 Volt bzw. eine geringe Spannung an, die über den Leistungshalbleiterschalter 56 aufgrund des Stromflusses abfällt. Auf diese Weise kann Strom durch die Freilaufdioden 57 der betreffenden Untermodule 35 fließen. Auf diese Weise wird ein Stromfluss durch den Energiespeicher 55 des in den dritten Zustand geschalteten Untermoduls 35 erreicht, so dass ein Strom durch den Energiespeicher 55 fließt.

Sobald ein Energiespeicher 55 eines Untermoduls 35 aufgeladen ist, wird dieses leitend geschaltet und ein nächstes aufzuladendes Untermodul 35 ausgewählt, das dann wie oben beschrieben in den dritten hochohmigen Zustand versetzt wird. Dies wird solange durchgeführt bis die Energiespeicher 55 aller Untermodule 35 der Wandlerzweige aufgeladen sind.

Bei beiden oben beschriebenen Strategien ist die transformatorseitige Ausgangsspannung während des Ladevorgangs immer Null, auch wenn die Halbleiterschalter der Untermodule geschaltet werden.

Anschließend werden die Hilfsladeschaltung abgeschaltet und die Netzspannung des eingangsseitigen Netzes an die erste Wandlerstufe 32 angelegt.

Sobald alle Untermodule 35 der ersten Wandlerstufe 32 aufgeladen sind, kann der Wandler 30 durch die Steuereinheit 39 angesteuert werden, um eine gewünschte Primärspannung an der Eingangsseite des Transformators 34 bereitzustellen.

Steht für die zweite Wandlerstufe 33 keine Hilfsladeschaltung zur Verfügung oder kann keine Spannungsquelle ausgangsseitig des Wandlers 1 bereitgestellt werden, so muss während der Einschaltphase die elektrische Energie zum initialen Aufladen der Energiespeicher 55 der Untermodule 35 der zweiten Wandlerstufe 33 über den Transformator 34 bereitgestellt werden. Die Energiespeicher 55 der Untermodule 35 der zweiten Wandlerstufe 33 werden wie bei der ersten Wandlerstufe 32 nacheinander aufgeladen.

Es kann vorgesehen sein, dass zum Aufladen der Energiespeicher der zweiten Wandlerstufe 33 die Transformatorspannung bei voller Ausgangsschaltfrequenz kontinuierlich von Null auf die Nennspannung erhöht wird. Der Transformator 34 ist so dimensioniert, dass die Streureaktanz ausreichend hoch ist, um eine Stromverzerrung bei normaler Schaltfrequenz gering zu halten. Die sekundärseitige Transformatorspannung lädt über die Freilaufdioden die Energiespeicher der Untermodule 35 der zweiten Wandlerstufe 33 auf die halbe Netzspannung auf. Anschließend werden die Untermodule 35 der zweiten Wandlerstufe 33 genauso wie die der ersten Wandlerstufe 32 geregelt bis auf die Netzspannung geladen.

Eine ungeregelte Aufladung kann für die zweite Wandlerstufe 33 analog angewendet werden. Die Untermodule 35 werden dazu passiv (Open-Load-Zustand) geschaltet, so dass die zweite Wandlerstufe 33 eine kontrollierte Gegenspannung zur Ausgangsspannung des Transformators 34 bereitstellt.

Gemäß einer weiteren Ausführungsform kann vorgesehen sein, dass die erste Wandlerstufe 32 nach ihrem Aufladen durch die Steuereinheit 30 so angesteuert wird, dass als Primärspannung an dem Transformator 34 eine einphasige dreistufige Rechteckspannung angelegt wird. Eine Vorbedingung für die Ausführbarkeit des Aufladens der zweiten Wandlerstufe 33 durch eine Steuerung der Primärspannung des Transformators ist, dass die Energiespeicher der Untermodule der zweiten Wandlerstufe 33 bereits mit einer Spannung geladen sind oder dass eine externe Hilfsspannung zum Betreiben der Untermodule zur Verfügung gestellt wird.

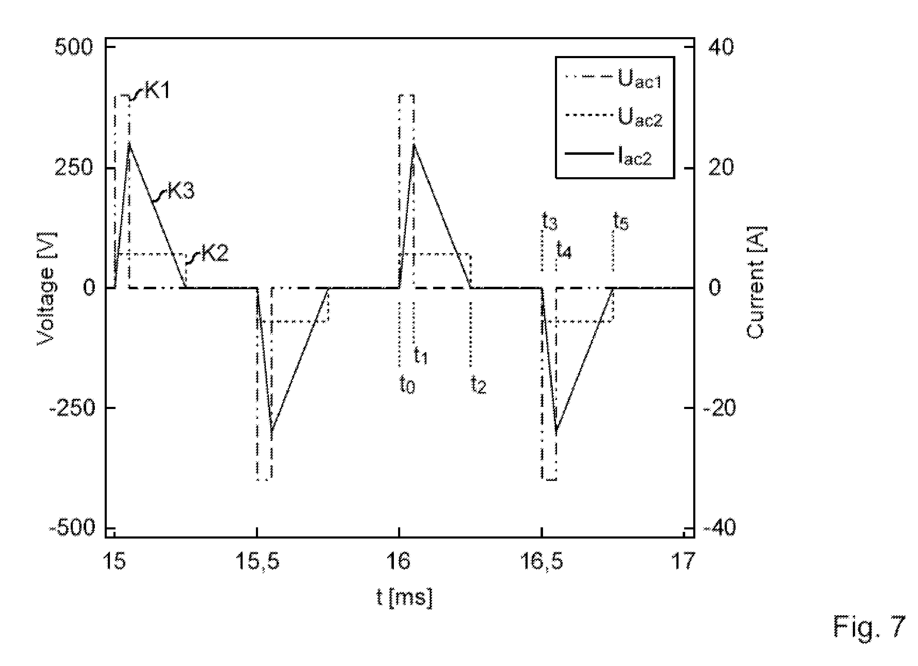

Der Verlauf der Primärspannung des Transformators 34 ist beispielsweise in Figur 7 dargestellt. Die Kurve K1 zeigt die von der ersten Wandlerstufe 2 als Primärspannung des Transformators 34 bereitzustellende Spannung. Man erkennt, dass die Primärspannung einer getakteten Spannung entspricht und während des Beginns der Einschaltphase für die zweite Wandlerstufe 33 lediglich periodischen Spannungsimpulsen mit sehr kleinem Tastverhältnis entspricht. Das Tastverhältnis entspricht bei einer zyklischen (pulsweitenmodulierten) Ansteuerung einem Verhältnis der Einschaltdauer zu der gesamten Zykluszeit der zyklischen Ansteuerung.

Die Spannungsimpulse der Primärspannung wechseln ihre Vorzeichen gemäß einer vorgegebenen Frequenz $f_T$, die gleich einer Grundfrequenz eines Normalbetriebs des Wandlers oder davon verschieden sein kann. Solange die Spannung in den Energiespeichern 55 zu Beginn noch sehr gering ist, wird das Tastverhältnis zum Bereitstellen der dreistufigen Primärspannung niedrig gehalten, um den Sekundärstrom zu begrenzen. Man erkennt in dem Diagramm der Figur 6 anhand der Kurve K2 den Verlauf der Sekundärspannung, die ebenfalls einen rechteckigen dreistufigen Verlauf, jedoch eine deutlich geringere Spannung aufweist. Der sekundärseitige Strom, der in die zweite Wandlerstufe 33 fließt, steigt während der Spannungsimpulse der Primärspannung linear (mit gleichem Vorzeichen wie die Primärspannung) an und fällt nach Ende des betreffenden Spannungsimpulses linear wieder auf 0 ab (Kurve K3), da ein Strom durch die Freilaufdioden 57 bzw. die Freilaufpfade der einzelnen Untermodule 5 fließt, wodurch die Energiespeicher 55 aufgeladen werden.

Die Leistungshalbleiterschalter 56 der einzelnen Untermodule 5, insbesondere bei IGBT$_S$, können anfänglich, d. h. ohne eine von dem betreffenden Energiespeicher bereitgestellte Spannung, nicht geschaltet werden, weil die zum Schalten erforderliche Hilfsspannung intern im Leistungshalbleiterschalter 56 generiert werden muss. Die Leistungshalbleiterschalter 56 befinden sich daher im geöffneten Zustand. Ein Stromfluss durch die Energiespeicher 55, um diese aufzuladen, kann daher nur durch die diesen Leistungshalbleiterschaltern 56 parallel geschalteten Freilaufdioden 57 erreicht werden.

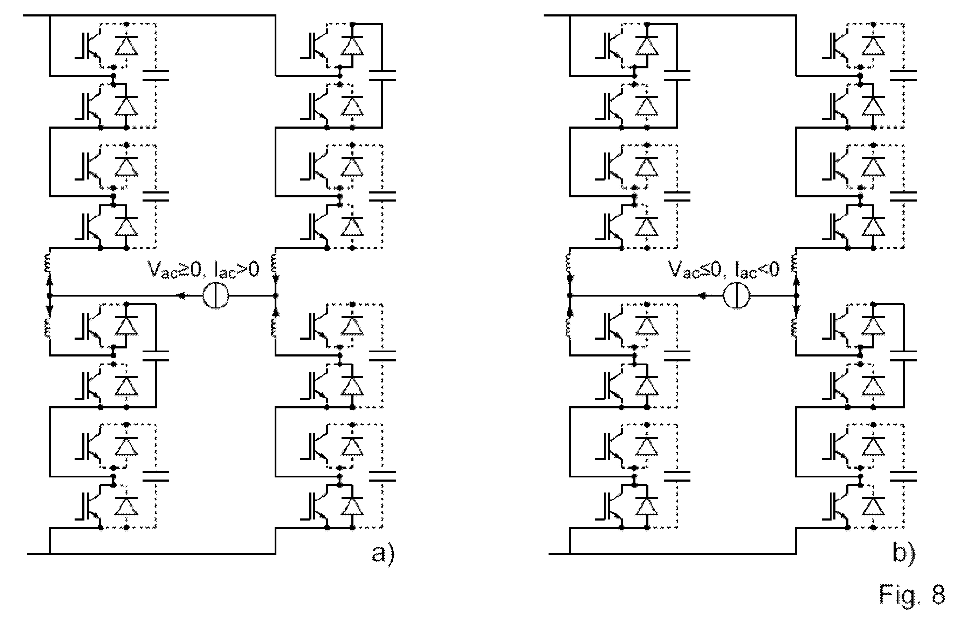

In den Figuren 8a und 8b sind für verschiedene Vorzeichen der Sekundärspannung $V_{AC2}$ des Transformators 4 die Strompfade durch die zweite Wandlerschaltung 33 am Beispiel der zweiten Wandlerstufe 33 der Figur 4 dargestellt. Die Strompfade sind dabei als durchgezogene Linien und die nicht stromführenden Schaltungsteile als gestrichelte Linien dargestellt. Die zweite Wandlerstufe 3 umfasst gemäß diesem Ausführungsbeispiel Untermodule 5, die zu Zweigen mit mehreren Untermodulen 35 verschaltet sind und zudem die Induktivität 36 aufweisen. Die Zweige sind gemäß einer H-Brückenschaltung miteinander gekoppelt. Selbstverständlich ist dieses Verfahren auch bei einer Halbbrückentopologie und anderen Wandlertopologien mit der obigen Funktionalität anwendbar.

Bei dem Aufladeverfahren werden zwei Untermodule 35 gleichzeitig aufgeladen, ein Untermodul 35 in einem Zweig, der mit einem ersten Transformatoranschluss verbunden ist, und ein Untermodul 35 in einem Zweig, der mit einem zweiten Transformatoranschluss verbunden ist.

Wie in Figur 8a gezeigt ist, werden die Energiespeicher 55 zweier Untermodule 35 von zwei ausgewählten Zweigen gleichzeitig geladen. Die beiden Zweige befinden sich in verschiedenen Reihenschaltungen der H-Brückenschaltung. In den ausgewählten Zweigen werden die Untermodule 35 der nicht zu ladenden Energiespeicher 55 kurzgeschlossen und diejenigen Untermodule, die den zu ladenden Energiespeicher aufweisen, werden in den passiven bzw. inaktiven Zustand geschaltet. Der Stromfluss in dem Untermodul 35, dessen Energiespeicher 55 aufgeladen werden soll, erfolgt durch die Freilaufdiode 57 eines der geöffneten Leistungshalbleiterschalter 56 und den zugeordneten Energiespeicher 55, so dass dieser aufgeladen wird.

Im Detail erfolgt das Aufladen der Energiespeicher 55 der Untermodule 35 der zweiten Wandlerstufe 33 durch eine Abfolge der folgenden Schritte:

-     Zunächst werden die Untermodule 35 der zweiten Wandlerstufe 33 in einen Zustand gebracht, in dem zumindest ein Untermodul 35 hochohmig geschaltet ist und die anderen Untermodule 35 kurzgeschlossen sind, wozu u.U. eine externe Hilfsschaltung erforderlich ist, die die Funktion und Ansteuerbarkeit der Halbleiterschalter der betreffenden Untermodule 35 gewährleistet .

-     Gesteuert durch die Steuereinheit 39 erzeugt die erste Wandlerstufe 32 eine rechteckige dreistufige Primärspannung mit einem variablen Tastverhältnis an der Primärseite des Transformators 34. Zu Beginn ist das Tastverhältnis der Rechteckwelle sehr gering, um den Anfangsstrom zu begrenzen. Wie zuvor erwähnt, sollte die Steuereinheit 39 ein Schaltschema vorsehen, das sicherstellt, dass die Energiespeicher 55 der ersten Wandlerstufe 32 in ihrem aufgeladenen Zustand verbleiben.

-     Während des Zeitfensters zwischen den Zeitpunkten t0 bis t1 erzeugt die erste Wandlerstufe 32 eine Primärspannung $V_{AC1}$ an der Primärseite des Transformators 34, die ein Vielfaches der Spannung der Energiespeicher 55 der Untermodule 35 der ersten Wandlerstufe 32 betragen kann. Die Spannung wird an der Streuinduktivität des Transformators 34 und an den Induktivitäten der ersten und der zweiten Wandlerstufe 32, 33 angelegt. Da die Spannung in den Energiespeichern 55 der Untermodule 35 der zweiten Wandlerstufe 33 zu Beginn noch 0 Volt beträgt, steigt der Strom mit einem hohen Gradienten an, wird jedoch durch die Induktivitäten 36 in jedem der Zweige begrenzt. Die Energiespeicher 55 der Untermodule 35 der zweiten Wandlerstufe 33, die nicht kurzgeschlossen sind, werden durch diesen Strom aufgeladen. Dies wird in den Figuren 8a und 8b durch die Angabe des Strompfades durch die einzelnen Untermodule 5 angegeben. Die Amplitude des Ladestroms wird durch die Zeitdauer zwischen t0 und t1 definiert:

$$\hat{I}_{AC} = \frac{V_{AC1} - V_{AC2}}{L_{tot}} \cdot (t1 - t0)$$

Der Zeitpunkt t1 ist so definiert, dass der Anfangsstrom auf einen bestimmten Wert begrenzt wird. Die Begrenzung wird durch die Steuereinheit 39 vorgenommen, die den Zeitpunkt t1 durch Wahl des Tastverhältnisses festlegt.

- Wenn der Strom den maximalen Referenzwert zum Zeitpunkt t1 erreicht hat, steuert die Steuereinheit 39 die erste Wandlerstufe 32 so an, dass die Primärspannung an dem Transformator 34 Null wird, indem die Anschlüsse des Transformators 34 kurzgeschlossen werden. Innerhalb eines weiteren Zeitfensters zwischen t1 und t2 fällt der Sekundärstrom wieder auf Null ab und lädt dabei die betreffenden Energiespeicher 55 in der zweiten Wandlerstufe 32.

- Zum Zeitpunkt t2 erreicht der Stromfluss Null und die Kapazitäten in der zweiten Wandlerstufe 3 werden weder geladen noch entladen.

- Während der nächsten Halbperiode beginnend vom Zeitpunkt t3, bei der die erste Wandlerstufe 32 durch die Steuereinheit 39 so angesteuert wird, dass nun eine negative Spannung $V_{AC2}$ an der Primärseite des Transformators 4 angelegt wird, steigt der Strom in dem Transformator 34 wieder an, dieses Mal jedoch mit entgegengesetzter Polarität. Der Wechsel des Vorzeichens der an den Transformator 34 angelegten Primärspannung dient dazu, dass alle Wandlerzweige geladen werden und dass der Kern des Transformators 34 nicht in die Sättigung gelangt.

- Wenn der Strom seinen Schwellenwert zum Zeitpunkt t4 erreicht, wird die erste Wandlerstufe 32 durch die Steuereinheit 39 wiederum so geschaltet, dass die primärseitigen Anschlüsse des Transformators 34 kurzgeschlossen werden und somit einen Freilaufpfad für den primärseitigen Strom bilden.

- In Folge des Aufladungsprozesses jedes der Zweige der zweiten Wandlerstufe 33 wird das Tastverhältnis zusehends erhöht, um die gleiche Amplitude des Ladestroms, d. h. sekundärseitigen Stroms, beizubehalten. Dies wird in Form einer geeigneten Regelung durch die Steuereinheit 39 vorgenommen, die anhand der Ausgangsspannung $V_{out}$ der zweiten Wandlerstufe 33 den sekundärseitigen Strom ermittelt und das Tastverhältnis zum Bereitstellen der Primärspannung des Transformators 34 entsprechend anpasst, indem die Untermodule 35 der ersten Wandlerstufe 32 entsprechend angesteuert werden. Dadurch ist es möglich, einen im Wesentlichen konstanten und begrenzten Ladestrom zum Aufladen der Energiespeicher 55 der zweiten Wandlerstufe 33 bereitzustellen.

- Die Änderung des Tastverhältnisses sollte vorzugsweise in zwei Schritten durchgeführt werden, wobei in einem ersten Schritt nur die Hälfte der durch die Steuereinheit 39 festgestellten Änderung des Tastverhältnisses für den Spannungsimpuls mit einer ersten Polarität und eine weitere Hälfte der Änderung des Tastverhältnisses während des Spannungsimpulses der Primärspannung mit der zweiten Polarität durchgeführt wird, um die Magnetisierung des Transformatorkerns nicht in die Sättigung zu bringen.

Die obigen Schritte werden für jedes Untermodul 35 eines Zweigs der zweiten Wandlerstufe 32 durchgeführt, wobei dasjenige Untermodul 35, dessen Energiespeicher 55 geladen werden soll, hochohmig geschaltet ist, während die übrigen Untermodule 35 kurzgeschlossen sind, d. h. zwischen ihren Anschlüssen liegt eine Spannung von 0 Volt an. Ist ein entsprechendes Untermodul 35 eines der Zweige der zweiten Wandlerstufe 33 geladen, so wird das betreffende Untermodul 35 kurzgeschlossen, wobei der Energiespeicher 55 seinen Ladezustand behält. Das Untermodul 35 mit dem als nächstes zu beladenden Energiespeicher 55 wird nun passiv bzw. inaktiv geschaltet und die übrigen Untermodule 35 werden kurzgeschlossen. Im Prinzip erfolgt die Aufladung während einer Halbwelle der Sekundärspannung in zwei Zweigen der zweiten Wandlerstufe 33, die in verschiedenen Reihenschaltungen angeordnet sind, während der Stromfluss durch die übrigen Untermodule 5 durch die Freilaufdioden 57 oder die geöffneten Leistungshalbleiterschalter 56 erreicht wird.

Je nachdem, welche sekundärseitige Spannung durch den Transformator 34 bereitgestellt wird, kann es notwendig sein, während einer nachfolgenden Phase die vorgeladenen Energiespeicher 55 der zweiten Wandlerstufe 33 weiter aufzuladen, um diese auf ein gewünschtes Spannungsniveau zu bringen. Dies kann beispielsweise durch das bereits in Verbindung mit der ersten Wandlerstufe 32 beschriebene Verfahren durch aufeinander folgendes Aktivieren des betreffenden Untermoduls 35 durchgeführt werden. Dazu wird vorzugsweise eine maximale Sekundärspannung erzeugt und nur das Untermodul 35, das den aufzuladenden Energiespeicher 55 ansteuert, in den ersten Zustand gebracht und die weiteren dazu seriell geschalteten Untermodule 35 werden kurzgeschlossen, um einen Strompfad durch den betreffenden Energiespeicher 55 auszubilden. Auf diese Weise kann an genau einen der Energiespeicher 55 der zweiten Wandlerstufe 33 die Sekundärspannung des Transformators 34 angelegt werden.

Mit dem obigen Verfahren kann der Anfangsstrom zum Aufladen der Energiespeicher 55 der zweiten Wandlerstufe 33 gesteuert werden, so dass die Ladezeit minimiert werden kann, da der Anfangsstrom auf einem hohen, jedoch einstellbaren Niveau gehalten wird.

Bezugszeichenliste

1, 10, 20 ,30....... Energiewandlersystem

2, 12, 22, 22....... erste Wandlerstufe

3, 13, 23, 33....... zweite Wandlerstufe

4, 14, 24, 34....... Transformator

5, 15, 25, 35....... Untermodul

6, 16, 26, 36....... Induktivität

19, 29, 39........... Steuereinheit

19A, 29A, 39A.... erste Untersteuereinheit

19B, 29B, 39B.... zweite Untersteuereinheit

50, 55................. Energiespeicher

52, 56................. Leistungshalbleiterschalter

53, 57................. Freilaufdiode

**Patentansprüche**

1. Energiewandlersystem (1; 10; 20; 30) zum Verbinden eines ersten Netzes, insbesondere eines Gleichspannungsnetzes oder eines ein- oder mehrphasigen Wechselspannungsnetzes, mit einem zweiten Netz, insbesondere eines Gleichspannungsnetzes oder eines ein- oder mehrphasigen Wechselspannungsnetzes, umfassend:

    - eine erste (2, 12, 22, 22) und eine zweite Wandlerstufe (3; 13; 23; 33), die als modulare Mehrpegelwandler aufgebaut sind, wobei jeder modulare Mehrpegelwandler Wandlerzweige mit einer Serienschaltung von mehreren Untermodulen (5; 15; 25; 35) mit jeweils einem Energiespeicher (50; 55) aufweist, wobei die Untermodule (5; 15; 25; 35) Leistungshalbleiterschalter (52; 56) mit parallelen Freilaufdioden (53; 57) aufweisen;
    - einen Transformator (4, 14, 24, 34), der die erste Wandlerstufe (2, 12, 22, 22) und die zweite Wandlerstufe (3; 13; 23; 33) miteinander koppelt.

2. Energiewandlersystem (1; 10; 20; 30) nach Anspruch 1, wobei jede Wandlerstufe (2, 12, 22, 22; 3; 13; 23; 33), eine Anzahl von Eingangsanschlüssen und eine Anzahl von Ausgangsanschlüssen aufweist, wobei in jeder Wandlerstufe (2, 12, 22, 22; 3; 13; 23; 33) jeder der Eingangsanschlüsse mit jedem der Ausgangsanschlüsse über einen Wandlerzweig verbunden ist.

3. Wandlerschaltung (1; 10; 20; 30) nach einem der Ansprüche 1 bis 2, wobei die Untermodule (5; 15; 25; 35) eine Halbbrückenschaltung oder eine H-Brückenschaltung aufweisen.

4. Energiewandlersystem nach einem der Ansprüche 1 bis 3, mit einer Steuereinheit (19, 29, 39), die eine erste Untersteuereinheit (19A, 29A, 39A) zur Ansteuerung der ersten Wandlerstufe (2, 12, 22, 22) und eine zweite Untersteuereinheit (19B, 29B, 39B) zur Ansteuerung der zweiten Wandlerstufe (3; 13; 23; 33) aufweist, wobei die erste Untersteuereinheit (19A, 29A, 39A) die erste Wandlerstufe (2, 12, 22, 22) betreibt, um eine Transformatorspannung an dem Transformator (4, 14, 24, 34) anzulegen.

5. Energiewandlersystem (1; 10; 20; 30) nach Anspruch 4, wobei die Transformatorspannung eine Frequenz aufweist, die größer ist als eine Frequenz des ersten Netzes und/oder des zweiten Netzes.

6. Energiewandlersystem (1; 10; 20; 30) nach einem der Ansprüche 4 und 5, wobei die erste Untersteuereinheit (19A, 29A, 39A) und/oder die zweite Untersteuereinheit (19B, 29B, 39B) einen oder mehrere elektrische Zustände überwacht, um einen Kurzschlussstrom und/oder eine Überspannung festzustellen, wobei diejenige Wandlerstufe, die einen Kurzschlussstrom und/oder eine Überspannung feststellt, eine Fehlerinformation an die jeweils andere Untersteuereinheit kommuniziert.

7. Energiewandlersystem (1; 10; 20; 30) nach Anspruch 5, wobei die erste (19A, 29A, 39A) und/oder die zweite Untersteuereinheit (19B, 29B, 39B) so ausgebildet sind, um ein Abschalten aller Untermodule (5; 15; 25; 35) oder ein Kurzschließen aller Untermodule (5; 15; 25; 35) durchzuführen, wenn die betreffende Untersteuereinheit 19A, 29A, 39A, 19B, 29B, 39B) einen Kurzschlussstrom und/oder eine Überspannung feststellt oder die Fehlerinformation empfängt.

8. Energiewandlersystem (1; 10; 20; 30) nach einem der Ansprüche 4 bis 7, wobei die zweite Untersteuereinheit (19B, 29B, 39B) ausgebildet ist, um während einer Einschaltphase, während der die Energiespeicher (50; 55) der Untermodule (5, 15, 25, 35) vorzuladen sind, die Energiespeicher (50; 55) der Untermodule (5; 15; 25; 35) der zweiten Wandlerstufe (3, 13, 23, 33) aufzuladen, und
wobei die erste Untersteuereinheit (19A, 29A, 39A) ausgebildet ist, um während der Einschaltphase die erste Wandlerstufe (2, 12, 22, 22) anzusteuern, so dass eine getaktete Primärspannung an den Transformator (4, 14, 24, 34) angelegt wird, wobei ein Sekundärstrom des Transformators (4, 14, 24, 34) beim Aufladen der Energiespeicher (50; 55) der Untermodule (5, 15, 25, 35) der zweiten Wandlerstufe (3, 13, 23, 33) durch Wahl eines Tastverhältnisses für die Primärspannung begrenzt wird.

9. Energiewandlersystem (1; 10; 20; 30) nach einem der Ansprüche 4 bis 8, wobei die zweite Untersteuereinheit (19B, 29B, 39B) ausgebildet ist, um in einem ersten Zeitabschnitt der Einschaltphase alle Untermodule (5, 15, 25, 35) der zweiten Wandlerstufe (3, 13, 23, 33) hochohmig zu schalten, um die Energiespeicher (50; 55) der Untermodule (5; 15; 25; 35) durch einen Stromfluss durch die jeweiligen Freilaufdioden (53; 57) aufgrund der Sekundärspannung auf eine Teilspannung vorzuladen.

10. Energiewandlersystem (1; 10; 20; 30) nach einem der Ansprüche 4 bis 9, wobei die zweite Untersteuereinheit (19B; 29B; 39B) ausgebildet ist, um während eines zweiten, auf den ersten folgenden Zeitabschnitts der Einschaltphase Untermodule (5; 15; 25; 35) von einem oder mehreren seriell verschalteten Wandlerzweigen, über denen jeweils eine Sekundärspannung des Transformators (4, 14, 24, 34) anliegt, nacheinander so zu schalten, dass die Energiespeicher der Untermodule einzeln oder zu mehreren nacheinander geladen werden, und um dasjenige Untermodul (5; 15; 25; 35), dessen Energiespeicher geladen werden soll, hochohmig zu schalten, während die übrigen Untermodule (5; 15; 25; 35) des betreffenden Wandlerzweigs kurzgeschlossen werden, so dass der Energiespeicher des Untermoduls (5; 15; 25; 35), dessen Energiespeicher (50; 55) geladen werden soll, durch einen Stromfluss durch eine seiner Freilaufdioden (53; 57) geladen wird.

11. Energiewandlersystem (60) zum Verbinden eines ersten Netzes mit einem zweiten Netz, umfassend:

   - eine erste Wandlerstufe (62), die als modulare Mehrpegelwandler aufgebaut ist, wobei jeder modulare Mehrpegelwandler Wandlerzweige mit einer Serienschaltung von mehreren Untermodulen (5) mit jeweils einem Energiespeicher (50; 55) aufweist, wobei die Untermodule (5) Leistungshalbleiterschalter (52; 56) mit parallelen Freilaufdioden (53; 57) aufweisen;
   - einen Transformator (64) , der die erste Wandlerstufe (2, 12, 22, 22) und die zweite Wandlerstufe (3, 13, 23, 33) miteinander koppelt;
   - eine Diodenbrücke (61) zum Gleichrichten einer sekundärseitigen Wechselspannung des Transformators (64), um eine Ausgangsgleichspannung bereitzustellen.

12. Energiewandlersystem (1; 10; 20; 30; 60) nach einem der vorangehenden Ansprüche, wobei jeder Wandlerzweig mit einer Serienschaltung einer Induktivität (6, 16, 26, 36) und den mehreren Untermodulen (5, 15, 25, 35) aufweist.

13. Verfahren zum Betreiben eines Energiewandlersystems nach einem der Ansprüche 1 bis 10, **dadurch gekennzeichnet, dass**
während der Einschaltphase die erste Wandlerstufe (2, 12, 22, 22) angesteuert wird, um eine getaktete Primärspannung an den Transformator (4, 14, 24, 34) anzulegen, wobei ein Sekundärstrom des Transformators (4, 14, 24, 34) beim Aufladen der Energiespeicher (50; 55) der Untermodule (5, 15, 25, 35) der zweiten Wandlerstufe durch Wahl eines Tastverhältnisses für die Primärspannung begrenzt wird.

14. Verfahren nach Anspruch 12, wobei das Tastverhältnis abhängig von der Höhe des Sekundärstroms angepasst wird.

15. Verfahren nach Anspruch 12 oder 13, wobei in einem ersten Zeitabschnitt der Einschaltphase alle Untermodule (5, 15, 25, 35) der zweiten Wandlerstufe hochohmig geschaltet sind, um die Energiespeicher (50; 55) der Untermodule (5, 15, 25, 35) durch einen Stromfluss durch die jeweiligen Freilaufdioden (53; 57) aufgrund der Sekundärspannung auf eine Teilspannung vorzuladen.

16. Verfahren nach Anspruch 14, wobei während eines zweiten, auf den ersten folgenden Zeitabschnitts der Einschaltphase Untermodule (5, 15, 25, 35) von einem oder mehreren seriell verschalteten Wandlerzweigen, über denen jeweils eine Sekundärspannung des Transformators (4, 14, 24, 34) anliegt, nacheinander so geschaltet werden, dass die Energiespeicher der Untermodule (5, 15, 25, 35) nacheinander geladen werden,
wobei dasjenige Untermodul (5, 15, 25, 35), dessen Energiespeicher (50; 55) geladen werden soll, hochohmig geschaltet wird, während die übrigen Untermodule (5, 15, 25, 35) des betreffenden Wandlerzweigs kurzgeschlossen werden, so dass der Energiespeicher (50; 55) des Untermoduls (5, 15, 25, 35), dessen Energiespeicher (50; 55) geladen werden soll, durch einen Stromfluss durch eine seiner Freilaufdioden (53; 57) geladen wird.

17. Verfahren nach Anspruch 14 oder 15, wobei das Tastverhältnis der Primärspannung während der Einschaltphase der zweiten Wandlerstufe (3, 13, 23, 33) so eingestellt wird, dass der Sekundärstrom einen vorgegebenen Mindestwert nicht unterschreitet.

18. Verfahren zum Betreiben eines Energiewandlersystems nach einem der Ansprüche 4 bis 10, **dadurch gekennzeichnet, dass**
die erste Untersteuereinheit (19A, 29A, 39A) und/oder die zweite Untersteuereinheit (19B, 29B, 39B) einen oder mehrere elektrische Zustände überwacht, um einen Kurzschlussstrom und/oder eine Überspannung festzustellen, wobei diejenige Wandlerstufe (2, 12, 22, 22; 3, 13, 23, 33), die einen Kurzschlussstrom und/oder eine Überspannung feststellt, eine Fehlerinformation an die jeweils andere Untersteuereinheit (19A, 29A, 39A; 19B, 29B, 39B) kommuniziert.

19. Verfahren nach Anspruch 17, wobei die erste und/oder die zweite Untersteuereinheit (19A, 29A, 39A; 19B, 29B, 39B) so ausgebildet sind, um ein Abschalten aller Untermodule (5, 15, 25, 35) oder ein Kurzschließen aller Untermodule (5, 15, 25, 35) durchzuführen, wenn die betreffende Untersteuereinheit (19A, 29A, 39A; 19B, 29B, 39B) einen Kurzschlussstrom und/oder eine Überspannung feststellt oder die Fehlerinformation empfängt.

$V_{in}$

2

4

1

3

$V_{out}$

Fig. 1

Fig. 2

EP 2 458 725 A1

Fig. 3

Fig. 4

$V_{out}$

$V_{in}$

$V_{AC2}$

$V_{AC1}$

30

32

33

34

35

36

39

39A

39B

Fig. 6

Fig. 5

a)

b)

$V_{dc}$

$V_x$

Fig. 7

$V_{ac} \geq 0, I_{ac} > 0$

a)

$V_{ac} \leq 0, I_{ac} < 0$

b)

Fig. 8

Europäisches
Patentamt

European
Patent Office

Office européen
des brevets

# EUROPÄISCHER RECHERCHENBERICHT

**Nummer der Anmeldung**

EP 10 19 3201

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | OATES C: "A methodology for developing 'Chain link' converters", POWER ELECTRONICS AND APPLICATIONS, 2009. EPE '09. 13TH EUROPEAN CONFERENCE ON, IEEE, PISCATAWAY, NJ, USA, 8. September 2009 (2009-09-08), Seiten 1-10, XP002604858, ISBN: 978-1-4244-4432-8 * Abbildungen 1-5,14 * * Seite 9, Absatz 1 * ----- | 1-19 | INV. H02M5/22 H02M3/335 ADD. H02M1/32 H02M1/36 |
| X | DE 102 17 889 A1 (SIEMENS AG [DE]) 13. November 2003 (2003-11-13) * Abbildungen 1,2,5,7, 8 * * Absatz 5 d) * * Absätze [0009], [0048] * ----- | 1-19 | |
| X | MANJREKAR M D ET AL: "Power electronic transformers for utility applications", INDUSTRY APPLICATIONS CONFERENCE, 2000. CONFERENCE RECORD OF THE 2000 IEEE 8-12 OCTOBER 2000, PISCATAWAY, NJ, USA,IEEE, Bd. 4, 8. Oktober 2000 (2000-10-08), Seiten 2496-2502, XP010522605, ISBN: 978-0-7803-6401-1 * Abbildung 1 * ----- | 1-19 | RECHERCHIERTE SACHGEBIETE (IPC) H02M |
| A | DE 101 03 031 A1 (MARQUARDT RAINER [DE]) 25. Juli 2002 (2002-07-25) * Abbildung 7 * * Absatz [0033] * ----- | 8-10,17 | |

Der vorliegende Recherchenbericht wurde für alle Patentansprüche erstellt

| Recherchenort | Abschlußdatum der Recherche | Prüfer |
|---|---|---|
| Den Haag | 15. April 2011 | Kail, Maximilian |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 19 3201

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-04-2011

| Im Recherchenbericht angeführtes Patentdokument | Datum der Veröffentlichung | Mitglied(er) der Patentfamilie | Datum der Veröffentlichung |
|---|---|---|---|
| DE 10217889 A1 | 13-11-2003 | AT 306141 T<br>WO 03090331 A2<br>DK 1497911 T3<br>EP 1497911 A2<br>JP 2005528870 T<br>US 2005083716 A1 | 15-10-2005<br>30-10-2003<br>19-12-2005<br>19-01-2005<br>22-09-2005<br>21-04-2005 |
| DE 10103031 A1 | 25-07-2002 | DE 20122923 U1 | 25-02-2010 |

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2294821 A1
- WO 201069401 A1

- DE 102008014898 A1

**In der Beschreibung aufgeführte Nicht-Patentliteratur**

- **R. MARQUARDT et al.** Modulares Stromrichterkonzept für Netzkupplungsanwendungen bei hohen Spannungen. *ETG-Fachtagung, Bad Nauheim, VDE,* 2002
- **A. LESNICAR ; R. MARQUARDT.** A new modular voltage source inverter topology. *EPE,* 2003, ISBN 90-75815-07-7

- **R. W. ERICSON et al.** A new family of matrix converters. *IEEE Industrial Electronic Society Annual Conference (IECON 01,* November 2001, vol. 2, 1515-1520
- **S. ANG KITITRAKUL et al.** Control and implementation of a new modular matrix converter. *IEEE,* 2004
- **A. ANTONOPOULOS et al.** On Dynamics and Voltage Control of the Modular Multilevel Converter. *EPE,* 2009